# EUROPÄISCHE PATENTSCHRIFT

(11) **EP 3 915 747 B1**
(45) Veröffentlichungstag und Bekanntmachung des Hinweises auf die Patenterteilung: **15.03.2023**
(21) Anmeldenummer: 20176919.7
(22) Anmeldetag: 27.05.2020
(51) Int. Cl.: B29B 9/06, E05C 19/14, B29C 48/00, B29C 48/25

(54) **SCHNELLSPANNVORRICHTUNG, GRANULIERVORRICHTUNG MIT EINER SOLCHEN SCHNELLSPANNVORRICHTUNG, BETREFFENDES VERSPANNVERFAHREN UND SPANNHEBEL**
QUICK CLAMPING DEVICE, GRANULATING DEVICE WITH SUCH A QUICK CLAMPING DEVICE, CLAMPING METHOD AND TENSIONING LEVER
DISPOSITIF DE SERRAGE RAPIDE, DISPOSITIF DE GRANULATION DOTÉ D'UN TEL DISPOSITIF DE SERRAGE RAPIDE, PROCÉDÉ DE SERRAGE ASSOCIÉ ET LEVIER DE SERRAGE

(43) Veröffentlichungstag der Anmeldung: 01.12.2021
(73) Patentinhaber: Nordson Corporation, Westlake, OH 44145-1119 (US)
(72) Erfinder: Schnellbach, Nikolai, 48308 Senden (DE)
(74) Vertreter: Eisenführ Speiser

(56) Entgegenhaltungen:
- EP-A1- 3 050 839
- EP-A1- 3 511 139
- CN-A- 103 273 586
- CN-U- 208 392 593
- CN-U- 209 320 046
- DE-A1- 4 116 933
- DE-A1-102009 057 781
- FR-A1- 3 025 845

## Beschreibung

Die Erfindung betrifft eine Schnellspannvorrichtung, insbesondere eine Einhandschnellspannvorrichtung, zum Verspannen einer ersten Baugruppe einer Granuliervorrichtung mit einer zweiten Baugruppe der Granuliervorrichtung, insbesondere eines Granulators mit einer Schneidkammer oder einer Schneidkammer mit einer Lochplatte, ein Verspannverfahren und einen Spannhebel.

Spannvorrichtungen zum Verspannen von Baugruppen einer Granuliervorrichtung, insbesondere eines Granulators mit einer Schneidkammer oder einer Schneidkammer mit einer Lochplatte, sind aus dem Stand der Technik bekannt.

Bei Granuliervorrichtungen sind die Baugruppen Granulator sowie Schneidkammer typischerweise voneinander trennbar ausgestaltet, insbesondere um die Granuliervorrichtung an unterschiedliche zu verarbeitende Materialen anpassen zu können und deren Reinigung und Wartung zu erleichtern. Zu diesem Zweck hat sich bewährt, den Granulator beweglich anzuordnen, etwa auf einem Schienensystem, wobei die Schneidkammer zumeist ortsfest angeordnet ist.

Einer besonderen Bedeutung kommt hierbei einer sicheren Verbindung der Komponenten Granulator und Schneidkammer im Betrieb zu, da beim Betrieb der Granuliervorrichtung hohe Drücke auftreten, welche die Baugruppen voneinander wegdrücken. Um dies zu verhindern sind Spannvorrichtungen aus dem Stand der Technik bekannt.

Derartige Spannvorrichtungen weisen zumeist mehrere Verschlussspanner auf, welche von einem Bediener zu installieren sind, während dieser gleichzeitig den Granulator in Richtung der Schneidkammer drückt. Auch sind Spannvorrichtungen mit Verschlussspannern bekannt, welche zur reversiblen Verspannung einer Schneidkammer mit einer Lochplatte einer Granuliervorrichtung Verwendung finden. Aus DE 41 16 933 A1 ist eine Granuliervorrichtung für plastische Kunststoffmassen bekannt, welche mittels eines Verbindungselements verbindbare Komponenten aufweist. CN 103 273 586 A betrifft eine Schneidvorrichtung für Kunststoffabfallgranulat. CN 209 320 046 U offenbart einen Pelletierer mit einer Schutzvorrichtung. EP 3 511 139 A1 zeigt eine Düsenanordnung für eine Granuliervorrichtung.

Obwohl sich derartige Verschlussspanner zur sicheren Verbindung der Baugruppen einer Granuliervorrichtung bewährt haben, besteht Raum für Verbesserungen.

Nachteilig bei den aus dem Stand der Technik vorbekannten Lösungen wirkt sich insbesondere aus, dass der Bediener mehrere Bewegungsabläufe sowie Positionswechsel vollziehen muss, beispielsweise um den Granulator in Richtung der Schneidkammer zu drücken und die mehreren Verschlussspanner sodann zu installieren.

Vor diesem Hintergrund lag der Erfindung die Aufgabe zugrunde, eine Spannvorrichtung der eingangs bezeichnenden Art dahingehend weiterzubilden, dass die im Stand der Technik aufgefundenen Nachteile möglichst weitgehend behoben werden. Insbesondere war eine Spannvorrichtung anzugeben, welche die Kopplung der Baugruppen einer Granuliervorrichtung und das Verspannen derselben erleichtert.

Erfindungsgemäß wird die Aufgabe bei einer Spannvorrichtung der eingangs genannten Art mit den Merkmalen des Anspruchs 1 gelöst.

Die Erfindung macht sich die Erkenntnis zunutze, dass der Vorgang des Ankoppelns und Verspannens der Baugruppen mittels der erfindungsgemäßen Schnellspannvorrichtung signifikant erleichtert werden kann. Im Vergleich zu aus dem Stand der Technik vorbekannten Lösungen ist lediglich noch eine einzige Bewegung notwendig, um das Spannmittel in die Spannposition zu bringen und die Baugruppen, insbesondere den Granulator mit der Schneidkammer, sicher zu verspannen.

Auf ebenso einfache Art und Weise ist durch eine in die entgegengesetzte Richtung ausgeführte Bewegung des Spannmittels der verspannte Zustand aufzuheben, sodass die Baugruppen voneinander getrennt werden können, um beispielsweise Wartungsarbeiten durchzuführen, und dergleichen.

Die Erfindung wird dadurch weitergebildet, dass die Schnellspannvorrichtung ein zweites Lagerelement aufweist, welches an derselben Baugruppe angeordnet ist wie das erste Lagerelement, ein zweites Verriegelungselement, welches an derselben Baugruppe angeordnet ist wie das erste Verriegelungselement, wobei das Spannmittel ein zweites Spannelement aufweist, welches drehbar um eine zweite Drehachse an dem zweiten Lagerelement gelagert ist, und das zweite Spannelement dazu eingerichtet ist, zusammen mit dem ersten Spannelement in die Spannposition verschwenkt zu werden, in welcher das zweite Spannelement mit dem zweiten Verriegelungselement in Eingriff steht.

Ein solches redundantes Vorsehen der wesentlichen Komponenten der Schnellspannvorrichtung, nämlich des Lagerelements, des Verriegelungselements sowie des Spannelements, hat sich als vorteilhaft zur Erhöhung der Betriebssicherheit erwiesen. Sollte es zu einem unwahrscheinlichen Versagen einer der Komponenten kommen, so stellt die redundante Auslegung sicher, dass die Baugruppen der Granuliervorrichtung im Betrieb sicher miteinander verbunden bleiben. Ferner kann der Verspannvorgang sowie das Lösen des Spannzustandes auf einfache Weise und durch eine einzige Bewegung des Spannmittels erfolgen, welches mit beiden Spannelementen gekoppelt ist. Das Vorsehen eines zweiten Spannelements ermöglicht darüber hinaus in vorteilhafter Weise eine gleichmäßige Einleitung einer die Baugruppen verspannenden Spannkraft. Hierdurch wird ferner eine besonders gegen Fluidaustritt gesicherte, dichte Verbindung zwischen den Baugruppen erzielt.

Gemäß einer bevorzugten Ausführungsform weist das Spannmittel einen mit dem wenigstens einen Spannelement verbundenen Spannhebel zur Betätigung des wenigstens einen Spannelements auf. Ein solcher Spannhebel hat sich als besonders vorteilhaft für Anwendungen gezeigt, bei denen das Koppeln und Verspannen der Baugruppen manuell durch einen Bediener erfolgt. In Abhängigkeit von der Anordnung des Spannhebels kann dieser nicht nur zum Verspannen der Komponenten selbst, sondern auch zum Bewegen des Granulators in Richtung der Schneidkammer verwendet werden.

Gemäß einer bevorzugten Ausführungsform weist das wenigstens eine Spannelement einen hakenförmigen Abschnitt auf, wobei der hakenförmige Abschnitt dazu eingerichtet ist, beim Verschwenken des Spannelements in die Spannposition mit dem Verriegelungselement in Eingriff zu treten und das Verriegelungselement gegen das Spannelement in der Spannposition zu verspannen. Der hakenförmige Abschnitt übernimmt eine Doppelfunktion. Er stellt zum einen das Verspannen des Verriegelungselementes gegen das Spannelement in der Spannposition sicher und dient des Weiteren dazu, die Baugruppen gegeneinander zu drücken, sobald der hakenförmige Abschnitt in Eingriff tritt mit dem Verriegelungselement. Dadurch wird der Bediener nicht nur beim Verriegeln der Baugruppen unterstützt, sondern auch dabei, die Baugruppen vor dem Verspannen miteinander zu koppeln.

Vorzugsweise weist der hakenförmige Abschnitt einen Hakengrund auf, wobei der Hakengrund korrespondierend zu einem Außenquerschnitt des Verriegelungselements ausgebildet ist. Auf diese Weise stellt der Hakengrund die Übertragung ausreichender Spannkräfte sicher und hält das Verriegelungselement darüber hinaus zuverlässig in der Spannposition.

Die Erfindung wird dadurch weitergebildet, dass der hakenförmige Abschnitt einen ersten Schenkel und einen zweiten Schenkel aufweist, wobei sich die Schenkel von dem Hakengrund aus erstrecken und ein Hakenmaul ausbilden, und wobei das Hakenmaul einen freien Querschnitt zwischen den Schenkeln ausbildet, welcher sich ausgehend von dem Hakengrund in Richtung der Schenkel aufweitet. Eine derartige Ausgestaltung der Schenkel beziehungsweise des Hakenmauls hat sich als besonders vorteilhaft erwiesen, um die Baugruppen gegeneinander zu drücken, sobald das Verriegelungselement in Eingriff tritt mit dem Hakenmaul. Mit anderen Worten wird das Verriegelungselement durch die Geometrie des Hakenmauls zu der Spannposition hingeführt, welches den Koppelvorgang der Baugruppen für den Bediener erleichtert und sowohl das Koppeln als auch das anschließende Spannen mittels einer einzigen Bewegung des Spannmittels beziehungsweise des Spannhebels ermöglicht.

Gemäß einer bevorzugten Weiterbildung weist der erste Schenkel und/oder der zweite Schenkel eine Verdickung auf, welche benachbart zu dem Hakengrund angeordnet ist, und welche dazu eingerichtet ist, das Verriegelungselement in der Spannposition zu halten. Die betreffende Verdickung wird von dem Verriegelungselement überwunden, wenn das Spannmittel in die Spannposition verschwenkt wird und sorgt in der Spannposition dafür, dass das Verriegelungselement sicher im Bereich des Hakengrundes gehalten wird und das Spannmittel ohne Aufbringen einer Kraft auf selbiges sicher in der Spannposition verbleibt. Gemäß einer alternativen Weiterbildung ist der Schenkel derart winklig, insbesondere flachwinklig, ausgebildet, dass er das Verriegelungselement in selbsthemmender Weise in der Spannposition hält.

Erfindungsgemäß weist das Spannelement ferner einen exzentrischen Abschnitt auf, wobei der exzentrische Abschnitt derart ausgebildet ist, dass dieser beim Bewegen des Spannelements aus der Spannposition heraus eine Kraft auf das Verriegelungselement aufbringt, welche die erste Baugruppe von der zweiten Baugruppe separiert. Diese bevorzugte Ausführungsform macht sich die Erkenntnis zunutze, dass bei Granuliervorrichtungen gegebenenfalls hohe Kräfte durch den Bediener auf den Granulator aufzubringen sind, um diesen zur Durchführung von Wartungsarbeiten und dergleichen von der Schneidkammer zu trennen. Der exzentrische Abschnitt bewirkt, dass bei einer Bewegung des Spannelements aus der Spannposition heraus eine Kraft auf das Verriegelungselement aufgebracht wird, welche die Baugruppen voneinander separiert.

Die Erfindung wird dadurch weitergebildet, dass der exzentrische Abschnitt einen Flächenmittelpunkt aufweist, welcher mit einer Drehachse des Spannelements korrespondiert. Ferner ist bevorzugt, dass einer der Schenkel durch den exzentrischen Abschnitt ausgebildet ist.

Gemäß einer bevorzugten Ausführungsform weist der exzentrische Abschnitt in jenem Bereich des Schenkels, der benachbart zu dem Hakengrund liegt, einen ersten Radius bezogen auf den Flächenmittelpunkt auf, wobei der Radius in zunehmender Entfernung von dem Hakengrund entlang des Schenkels zunimmt, insbesondere linear oder nicht linear.

In Abhängigkeit von der Ausgestaltung des exzentrischen Abschnittes lässt sich die vom Bediener auf das Spannmittel aufgebrachte Bedienkraft wie gewünscht übersetzen. So bewirkt beispielsweise eine geringe Zunahme des Radius entlang des Schenkels, oder mit anderen Worten eine geringe Steigung des exzentrischen Abschnittes, dass für eine bestimmte Bewegungsdistanz und Bewegungskraft des Spannmittels eine größere Kraft auf das Lagerelement aufgebracht wird, dieses aber lediglich um eine geringe Wegstrecke von der Drehachse des Lagerelementes weggedrückt wird. Eine größere Steigung des exzentrischen Abschnittes hat, bei gleicher auf das Spannmittel aufgebrachter Kraft und gleicher Bewegungsdistanz, zur Folge, dass das Verriegelungselement weiter von der Drehachse weggedrückt wird, jedoch nur eine geringere Kraft auf selbiges übertragen wird.

Gemäß einer bevorzugten Ausführungsform ist das Verriegelungselement und/oder das Lagerelement als Bolzen ausgebildet. Dabei weisen das Verriegelungselement und das Lagerelement vorzugsweise dieselbe Geometrie auf. Hierdurch wird die Interoperabilität der Komponenten verbessert.

Die Erfindung wird dadurch weitergebildet, dass die Schnellspannvorrichtung eine Antriebsvorrichtung zum Antreiben des Spannmittels aufweist, wobei die Antriebsvorrichtung insbesondere wenigstens eines der folgenden aufweist oder daraus ausgebildet ist: Elektromotor, hydraulischer Aktuator oder pneumatischer Antrieb, insbesondere aufweisend einen Zylinderantrieb und/oder einen Drehantrieb. Für Anwendungsbereiche, in welchen die Baugruppen nicht manuell gekoppelt und/oder verspannt werden sollen, hat es sich als vorteilhaft erwiesen, eine Antriebsvorrichtung zum Antreiben des Spannmittels vorzusehen.

Vorzugsweise weist die Schnellspannvorrichtung eine Sensorvorrichtung zur Sensierung der Position des Spannmittels auf. Die Sensorvorrichtung ist gemäß einer bevorzugten Ausführungsform an dem Granulator angeordnet und/oder dazu eingerichtet, ein Signal zu generieren, wenn sich das Spannmittel in der Spannposition befindet und/oder aus dieser heraus bewegt wird.

Gemäß einer alternativen Ausführungsform ist die Sensorvorrichtung signalleitend mit einer Steuerungseinrichtung der Granuliervorrichtung verbunden, wobei die Steuerungseinrichtung dazu eingerichtet ist, die Granuliervorrichtung zu stoppen, wenn das Spannmittel aus der Spannposition heraus bewegt wird. Ferner ist bevorzugt, dass die Steuerungseinrichtung dazu eingerichtet ist, die Granuliervorrichtung zu starten, nachdem das Spannmittel in die Spannposition bewegt worden ist.

Weiterhin bevorzugt weist die Schnellspannvorrichtung ein Verriegelungsmittel, insbesondere ein elektromechanisches Verriegelungsmittel auf, welches dazu eingerichtet ist, das Spannmittel in der Spannposition zu halten und/oder aus der Spannposition freizugeben. Hierdurch wird verhindert, dass das Spannmittel während des Betriebs der Granuliervorrichtung versehentlich aus der Spannposition herausbewegt wird.

Eine vorteilhafte Weiterbildung sieht vor, dass der Spannhebel zwei beabstandete Spannhebelschenkel und einen die Spannhebelschenkel verbindenden Handgriff aufweist. Durch die zwei Spannhebelschenkel ist eine mechanisch besonders feste und zuverlässige Halterung vorhanden, und mittels des Handhebels lässt sich die Schnellspannvorrichtung sehr einfach und effizient bedienen.

Vorteilhaft mit Blick auf eine platzsparende und dennoch sehr funktionale Anbindung an eine der Baugruppen ist es, wenn der Spannhebel, insbesondere dessen zwei beabstandete Spannhebelschenkel, einen mit dem Spannelement gekoppelten ersten Spannhebelabschnitt und einen sich winklig zu dem ersten Spannhebelabschnitt erstreckenden zweiten Spannhebelabschnitt und vorzugsweise einen sich winklig zu dem zweiten Spannhebelabschnitt erstreckenden dritten Spannhebelabschnitt aufweist, an dessen distalen Ende der Handgriff befestigt ist. Die Winkel können vorzugsweise so gewählt werden, dass der Hebel eine gute Drehmomenteinbringung ermöglicht und gleichzeitig vorzugsweise eine gute manuelle Betätigung mit ausreichend Platz und ohne Klemmen der Hand möglich ist.

Besonders vorteilhaft im Hinblick auf eine zuverlässige, sichere Verspannung ist es, dass der Spannhebel so an der ersten Baugruppe oder der zweiten Baugruppe der Granuliervorrichtung schwenkbar gelagert ist, dass der Spannhebel nach Art eines Kniehebels beim Verspannen über einen toten Punkt hinausgelangt und/oder eine selbsthemmende Verspannung entsteht.

Die Erfindung ist vorstehend unter Bezugnahme ob eine Schnellspannvorrichtung beschrieben worden. In einem weiteren Aspekt betrifft die Erfindung eine Granuliervorrichtung zur Herstellung von Granulat aus einem Schmelzefluss, mit einem Granulator und einer Schneidkammer.

Die Erfindung löst die eingangs bezeichnete Aufgabe in Bezug auf die Granuliervorrichtung, indem diese eine Schnellspannvorrichtung mit einem Spannmittel zum Verspannen von Granulator und Schneidkammer aufweist.

Die Erfindung wird dadurch weitergebildet, dass die Schnellspannvorrichtung nach einem der vorstehend beschriebenen bevorzugten Ausführungsbeispiele ausgebildet ist.

Die erfindungsgemäße Granuliervorrichtung macht sich die gleichen Vorteile und bevorzugten Ausführungsformen zunutze wie die erfindungsgemäße Schnellspannvorrichtung. Diesbezüglich wird auf die obigen Ausführungen verwiesen und deren Inhalt hier mit einbezogen.

In einem weiteren Aspekt betrifft die Erfindung ein Verfahren zum Verspannen einer ersten Baugruppe einer Granuliervorrichtung mit einer zweiten Baugruppe der Granuliervorrichtung, insbesondere eines Granulators mit einer Schneidkammer oder einer Schneidkammer mit einer Lochplatte.

Die Erfindung löst die eingangs bezeichnete Aufgabe in Bezug auf das Verfahren mit den Schritten: Bereitstellen der ersten Baugruppe, insbesondere eines Granulators oder einer Lochplatte, Bereitstellen der zweiten Baugruppe, insbesondere einer Schneidkammer, Verspannen der ersten Baugruppe mit der zweiten Baugruppe mittels einer Schnellspannvorrichtung, wobei die Schnellspannvorrichtung nach einem der vorstehend bezeichneten und beschriebenen Ausführungsbeispiele ausgebildet ist.

Das Verfahren macht sich die gleichen Vorteile und bevorzugten Ausführungsformen zunutze wie die erfindungsgemäße Schnellspannvorrichtung. Diesbezüglich wird auf die obigen Ausführungen verwiesen und deren Inhalt hier mit einbezogen.

Das Verfahren wird in vorteilhafter Weise dadurch weitergebildet, dass das Spannmittel mittels eines mit dem wenigstens einen Spannelement verbundenen Spannhebel betätigt wird, und der Spannhebel an der ersten Baugruppe oder der zweiten Baugruppe der Granuliervorrichtung nach Art eines Kniehebels schwenkbar gelagert ist und zum Verspannen über einen toten Punkt hinaus rotiert wird und eine selbsthemmende Verspannung entsteht.

Gemäß einer weiteren vorteilhaften Weiterbildung wird zum Entspannen eine Kraft auf das Verriegelungselement aufgebracht und dadurch die erste Baugruppe von der zweiten Baugruppe entspannt, vorzugsweise mindestens etwas distanziert wird.

Gemäß eines weiteren Aspektes betrifft die Erfindung zur Lösung der Aufgabe ferner einen Spannhebel, welcher mit einem Spannelement koppelbar ist zur Betätigung des Spannelements einer erfindungsgemäßen Schnellspannvorrichtung zum Verspannen einer ersten Baugruppe einer Granuliervorrichtung mit einer zweiten Baugruppe der Granuliervorrichtung. Erfindungsgemäß ist vorgesehen, dass der Spannhebel zwei beabstandete Spannhebelschenkel und einen die Spannhebelschenkel verbindenden Handgriff aufweist.

Zusätzlich oder alternativ wird vorgeschlagen, dass der Spannhebel, insbesondere dessen zwei beabstandete Spannhebelschenkel einen mit dem Spannelement (gekoppelten ersten Spannhebelabschnitt und einen sich winklig zu dem ersten Spannhebelabschnitt erstreckenden zweiten Spannhebelabschnitt aufweist.

Hinsichtlich der weiteren Vorteile und bevorzugten Merkmale des Spannhebels wird auf die obigen und nachfolgenden Beschreibungen Bezug genommen

Die Erfindung wird nachfolgend anhand bevorzugter Ausführungsbeispiele unter Bezugnahme auf die beigefügten Figuren näher beschrieben.

Hierbei zeigen:
- Fig. 1 und 2: ein erstes Ausführungsbeispiel einer erfindungsgemäßen Granuliervorrichtung in perspektivischen Darstellungen;
- Fig. 3: das Ausführungsbeispiel der erfindungsgemäßen Granuliervorrichtung gemäß den Figuren 1 und 2 in einer Draufsicht;
- Fig. 4: eine Detailansicht der Schneidkammer gemäß dem ersten Ausführungsbeispiel der Figuren 1-3;
- Fig. 5: ein erfindungsgemäßes Spannelement gemäß dem ersten Ausführungsbeispiel in einer perspektivischen Darstellung;
- Fig. 6: einer Detailansicht der erfindungsgemäßen Granuliervorrichtung gemäß dem ersten Ausführungsbeispiel in einer perspektivischen Ansicht;
- Fig. 7 und 8: ein alternatives Ausführungsbeispiel einer erfindungsgemäßen Granuliervorrichtung in perspektivischen Ansichten;
- Fig. 9: das alternative Ausführungsbeispiel der erfindungsgemäßen Granuliervorrichtung gemäß den Figuren 7 und 8 in einer Draufsicht;
- Fig. 10: eine Detailansicht der Schneidkammer gemäß dem alternativen Ausführungsbeispiel der Figuren 7-9;
- Fig. 11: ein erfindungsgemäßes Spannelement gemäß dem alternativen Ausführungsbeispiel in einer perspektivischen Darstellung;
- Fig. 12: einer Detailansicht der erfindungsgemäßen Granuliervorrichtung gemäß dem alternativen Ausführungsbeispiel in einer perspektivischen Ansicht; und
- Fig. 13: ein weiteres alternatives Ausführungsbeispiel einer erfindungsgemäßen Schnellspannvorrichtung.

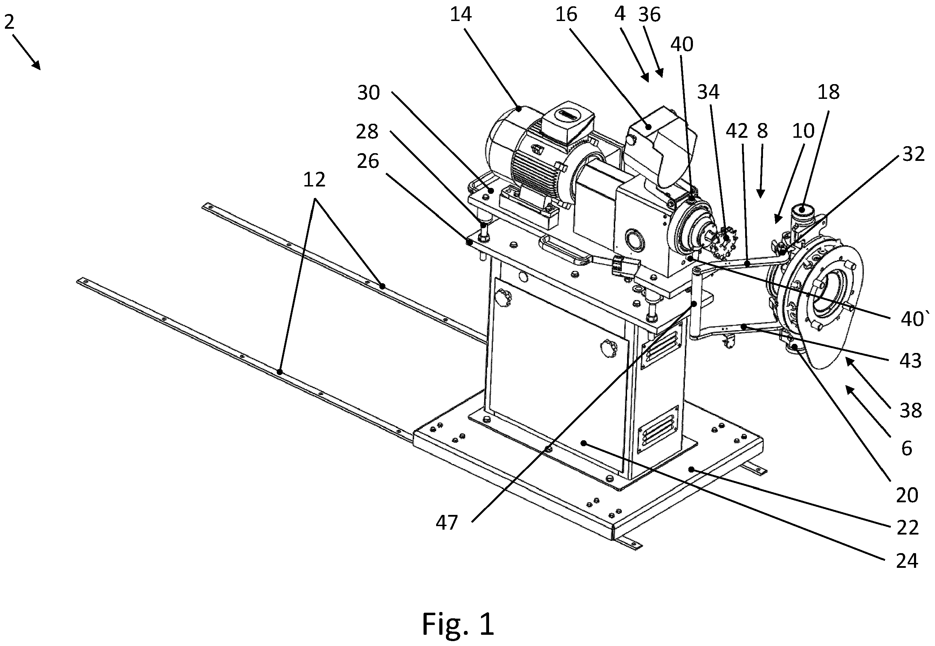

Figur 1 zeigt eine Granuliervorrichtung 2 zur Herstellung von Granulat aus einem Schmelzefluss. Die Granuliervorrichtung 2 weist einen Granulator 4 sowie eine Schneidkammer 6 auf. Die Schneidkammer 6 ist ortsfest angeordnet. Der Granulator 4 ist auf Granulatorschienen 12 beweglich angeordnet, derart, dass der Granulator 4 in Richtung der Schneidkammer 6 bewegt werden und mit dieser gekoppelt werden kann.

Der Granulator 4 weist einen Bodenabschnitt 22 auf, auf welchem ein Gehäuse 24 angeordnet ist. An der Oberseite des Gehäuses 24 ist eine Grundplatte 26 angeordnet, an welcher mit Hilfe von Beabstandungselementen 28 ein Maschinenträger 30 angeordnet ist. Auf dem Maschinenträger 30 ist ein Antrieb 14 angeordnet, welcher ein Schneidmesser 34 antreibt. Der Granulator 4 weist ferner eine Schutzhaube 16 auf. Der Granulator 4 ist eine erste Baugruppe 36.

An dem Granulator 4 sind Verriegelungselemente 40, 40' angeordnet, insbesondere in jenem Bereich des Granulators 4, welcher mit der Schneidkammer 6 gekoppelt wird. Die Verriegelungselemente 40, 40' sind Teil einer Schnellspannvorrichtung 8.

Die Schneidkammer 6 ist eine zweite Baugruppe 38. Die Schneidkammer 6 weist einen Einlass für Prozesswasser 20 sowie einen Auslass für Prozesswasser und Granulat 18 auf. In der Schneidkammer 6 erfolgt ein Granulieren und Schneiden einer zugeführten Schmelze, wobei sowohl Prozesswasser als auch Granulat aus dem Auslass 18 aus der Schneidkammer 6 austreten.

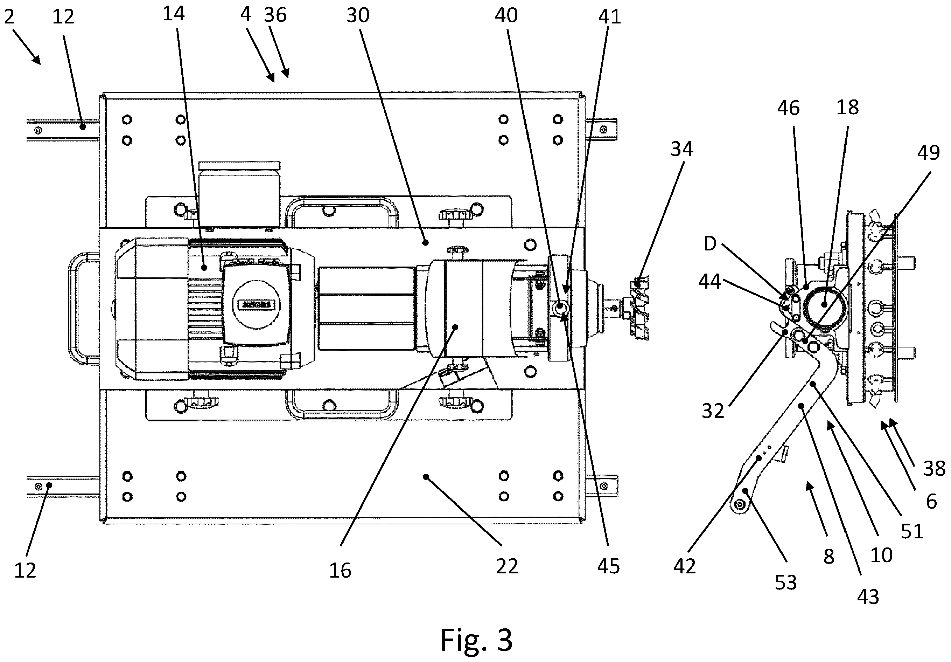

An der Schneidkammer 6 ist ein Spannmittel 10 angeordnet. Das Spannmittel 10 weist ein Spannelement 32 auf. Das Spannelement 32 ist drehbar an einem Lagerelement 44 (vgl. Figur 3) gelagert. Das Spannmittel 10 weist einen mit dem Spannelement 32 verbundenen Spannhebel 42 auf.

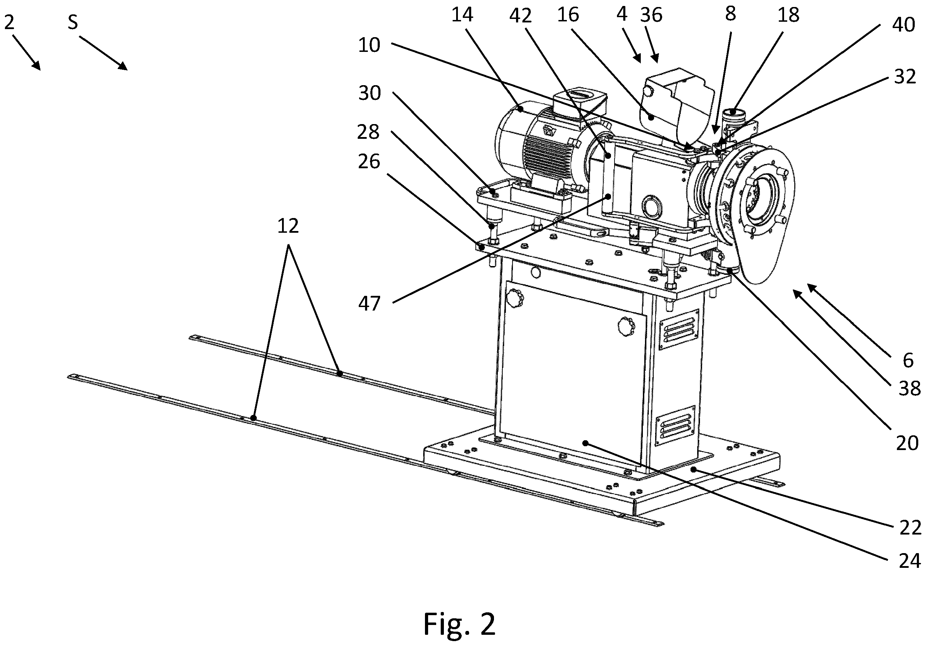

Figur 2 zeigt die Granuliervorrichtung 2 aus Figur 1, wobei sich das Spannmittel 10 hier in einer Spannposition S befindet. In der Spannposition S ist der Granulator 4 mit der Schneidkammer 6 mittels der Schnellspannvorrichtung 8 verspannt. Dabei steht das Spannelement 32 mit dem Verriegelungselement 40 in Eingriff und verspannt die erste Baugruppe 36 gegen die zweite Baugruppe 38. Weitere Details hierzu sind in Figur 3 gezeigt.

Figur 3 zeigt die Granulatorvorrichtung 2, umfassend den Granulator 4 sowie die Schneidkammer 6, in einer Draufsicht. Wie Figur 3 zu entnehmen ist, weist der Granulator 4 an seiner Oberseite im Bereich benachbart zu dem Schneidmesser 34 das Verriegelungselement 40 auf, welches einen Außenquerschnitt 41 aufweist. Das Verriegelungselement 40 ist als Bolzen 45 ausgebildet. Das an der Schneidkammer 6 angeordnete Spannelement 32 ist drehbar um eine Drehachse D an einem Lagerelement 44 gelagert. Mit dem Spannelement 32 ist der Spannhebel 42 verbunden. Eine Schwenkbewegung des Spannhebels 42 führt dazu, dass sich das mit dem Spannhebel 42 verbundene Spannelement 32 um die Drehachse D dreht. Das Lagerelement 44 ist an einem Bolzenhalter 46 angeordnet, welcher mit der Schneidkammer 6 verbunden ist. Das Spannelement 32 ist dazu eingerichtet, nach dem Bewegen des Granulators 4 in Richtung der Schneidkammer 6 mit dem Verriegelungselement 40 in Eingriff zu treten und in die Spannposition S verschwenkt zu werden, welche in Figur 2 dargestellt ist.

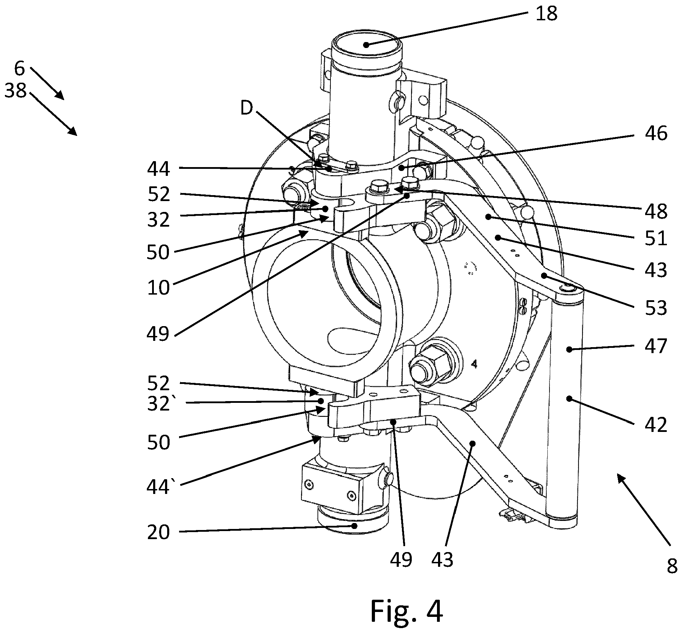

Figur 4 zeigt eine perspektivische Ansicht der Schneidkammer 6. Die Schneidkammer 6 weist wesentliche Teile der Schnellspannvorrichtung 8 auf. Die Schnellspannvorrichtung 8 weist das erste Spannelement 32 sowie ein zweites Spannelement 32' auf. Beide Spannelemente 32, 32' sind mittels Verbindungsschrauben 48 verbunden mit dem Spannhebel 42. Eine Bewegung des Spannhebels 42 hat auch eine Bewegung der beiden Spannelemente 32, 32' zur Folge.

Wie bereits in Bezug auf Figur 3 ausgeführt, ist das Spannelement 32 um die Drehachse D an dem Lagerelement 44 gelagert. Das Lagerelement 44 ist an dem Bolzenhalter 46 angeordnet. Das Spannelement 32` ist drehbar um eine Drehachse (nicht dargestellt) an dem Lagerelement 44' gelagert. Die Spannelemente 32, 32' weisen jeweils einen hakenförmigen Abschnitt 50 auf. Darüber hinaus weisen die Spannelemente 32, 32' einen exzentrischen Abschnitt 52 auf. Der exzentrische Abschnitt 52 ist derart ausgebildet, dass dieser beim Bewegen der Spannelemente 32, 32' aus der in Figur 2 gezeigten Spannposition S heraus eine Kraft auf die Verriegelungselemente 40, 40' ausübt. Hierdurch wird die erste Baugruppe 36 von der zweiten Baugruppe 38 separiert (vgl. Figur 2).

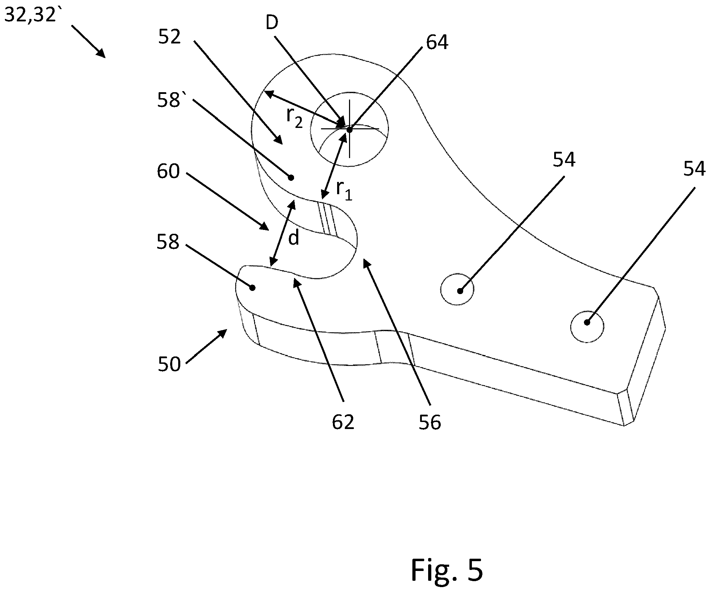

Figur 5 zeigt ein Spannelement 32, 32`. Das Spannelement 32, 32` ist mittels der Gewindebohrung 54 mit dem Spannhebel 42 (vgl. beispielsweise Figur 4) verbindbar. Alternativ können das Spannelement 32, 32' und der Spannhebel 42 einteilig ausgebildet sein. Das Spannelemente 32, 32' weist einen hakenförmigen Abschnitt 50 auf. Der hakenförmige Abschnitt 50 wird durch einen Hakengrund 56 sowie einen ersten Schenkel 58 und einen zweiten Schenkel 58` gebildet. Die Schenkel 58, 58` spannen ein Hakenmaul 60 auf. Das Hakenmaul 60 bildet einen freien Querschnitt d zwischen den Schenkeln 58, 58' aus. Der freie Querschnitt d weitet sich ausgehend vom Hakengrund 56 in Richtung der Schenkel 58, 58' auf. Der erste Schenkel 58 weist vorliegend eine Verdickung 62 auf. Die Verdickung 62 ist benachbart zu dem Hakengrund 56 angeordnet. Die Verdickung 62 ist dazu eingerichtet, das Verriegelungselement 40 (vgl. beispielsweise Figur 3) in der Spannposition S zu halten. Der erste Schenkel 58 kann alternativ derart winklig ausgebildet sein, dass er das Verriegelungselement 40 (siehe Figur 3) in selbsthemmender Weise in der Spannposition S hält.

Das Spannelement 32, 32' weist ferner einen exzentrischen Abschnitt 52 auf. Der exzentrische Abschnitt 52 ist derart ausgebildet, dass dieser beim Bewegen des Spannelements 32, 32' aus der Spannposition S heraus eine Kraft auf das Verriegelungselement 40 40' (vgl. Figur 3) ausübt. Der exzentrische Abschnitt 52 weist einen Flächenmittelpunkt 64 auf, welcher mit der Drehachse D des Spannelements 32, 32' korrespondiert. Der exzentrische Abschnitt 52 bildet den Schenkel 58' aus. Der exzentrische Abschnitt 52 weist im Bereich des Hakengrundes 56 einen ersten Radius r₁ auf, welcher kleiner ist, als ein Radius r₂, welcher sich weiter entfernt von dem Hakengrund 56 an dem zweiten Schenkel 58' befindet. Der Radienanstieg zwischen dem Radius r₁ und dem Radius r₂ ist linear, optional nichtlinear.

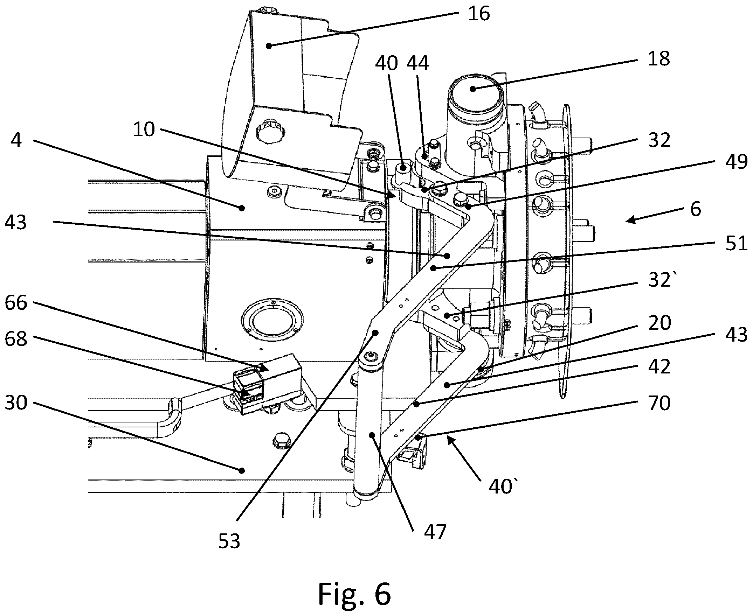

Figur 6 zeigt eine Detailansicht des Granulators 4 sowie der Schneidkammer 6 in einem gekoppelten jedoch nicht verriegelten Zustand. An dem Granulator 4 ist benachbart zu dem Maschinenträger 30 eine Sensorvorrichtung 66 angeordnet. Die Sensorvorrichtung 66 ist dazu eingerichtet, ein Signal zu generieren, wenn das Spannmittel 10 beziehungsweise der Spannhebel 42 aus der Spannposition S (vgl. Figur 2) bewegt wird. Das generierte Signal kann etwa dazu verwendet werden, den Granulator 4 zu stoppen, zu starten oder einen Betrieb des Granulators 4 zu verhindern, wenn sich Spannmittel 10 und Spannhebel 42 in der in Figur 6 gezeigten Position befinden.

An dem Granulator 4 ist darüber hinaus eine Verriegelungseinrichtung 68, insbesondere eine elektromechanische Verriegelungseinrichtung 68, angeordnet. Die Verriegelungseinrichtung 68 ist dazu eingerichtet, ein Verriegelungsmittel 70, welches an dem Spannhebel 42 angeordnet ist, selektiv festzuhalten oder freizugeben. Mit anderen Worten stellt die Verriegelungseinrichtung 68 sicher, dass sich der Spannhebel 42, wenn sich das Spannmittel 10 in der Spannposition S befindet, und der Granulator 4 sowie die Schneidkammer 6 betrieben werden, nicht aus der Spannposition S heraus, etwa versehentlich, bewegt werden kann. Sobald sich Granulator 4 und Schneidkammer 6 nicht länger im Betrieb befinden, ist die Verriegelungseinrichtung 68 dazu eingerichtet, den Spannhebel 42, und damit das Spannmittel 10, freizugeben. Der Spannhebel 42 kann nunmehr aus der Spannposition S heraus bewegt werden.

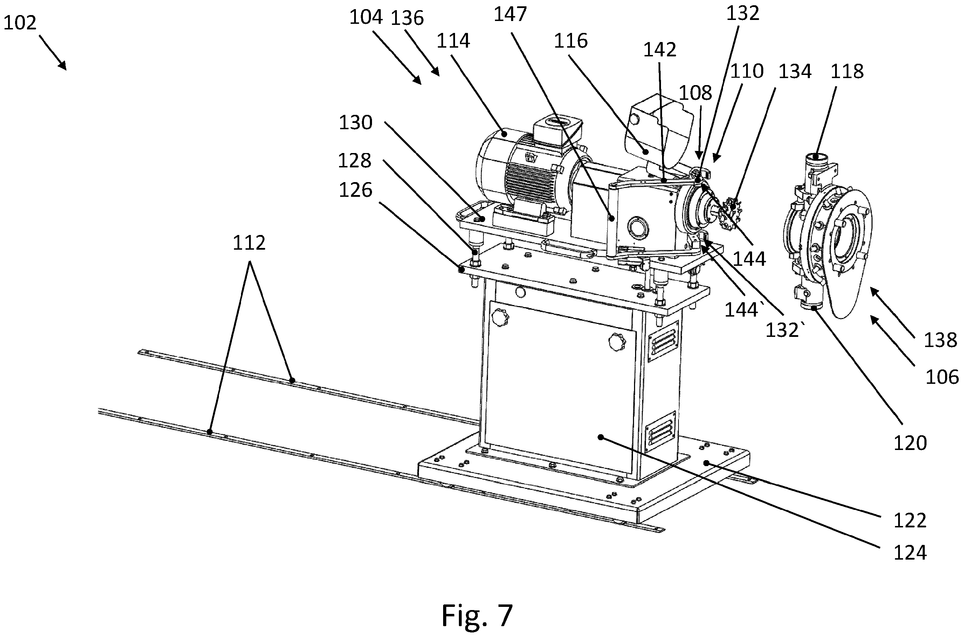

Die Figuren 7-12 zeigen ein alternatives Ausführungsbeispiel einer Granuliervorrichtung 102. Die Granuliervorrichtung 102 weist ein Granulator 104 sowie eine Schneidkammer 106 auf. Die Schneidkammer 106 ist ortsfest angeordnet. Der Granulator 104 ist auf Granulatorschienen 112 beweglich gelagert. Die Granuliervorrichtung 102 weist eine Schnellspannvorrichtung 108 auf. Die Schnellspannvorrichtung 108 weist ein Spannmittel 110 auf, mit zwei Spannelementen 132, 132`.

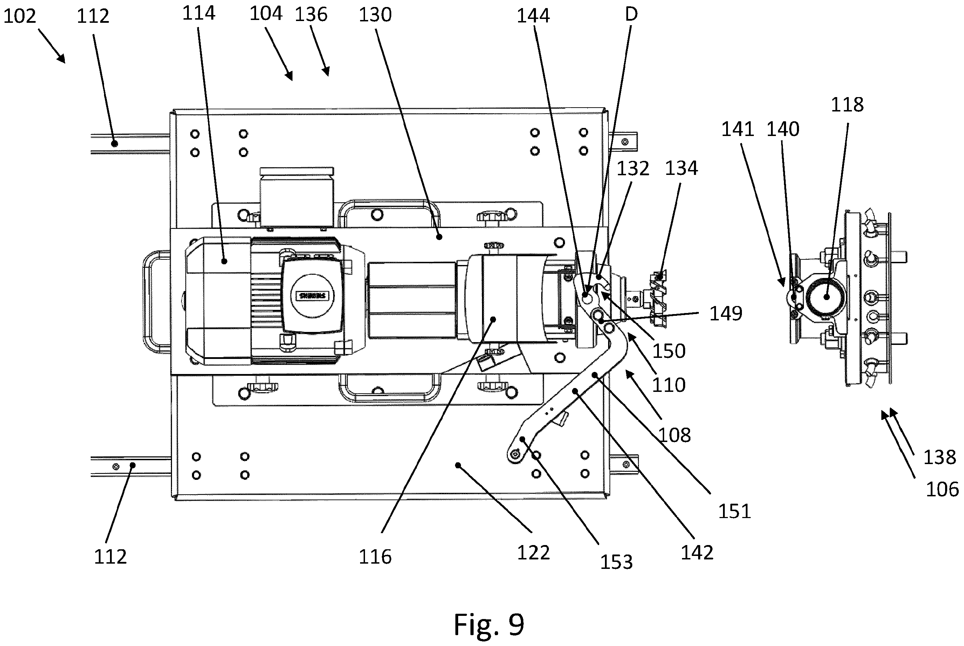

Im Gegensatz zum ersten Ausführungsbeispiel der Figuren 1-6 sind die Spannelemente 132, 132` nunmehr an dem Granulator 104 angeordnet. Gleichsam sind Verriegelungselemente 140, 140' (vgl. Figur 9) nunmehr an der Schneidkammer 106 angeordnet.

Der Granulator 104 weist in bereits bekannter Weise einen Bodenabschnitt 122 sowie ein Gehäuse 124 auf. An der Oberseite des Gehäuses 124 ist eine Grundplatte 126 angeordnet, oberhalb welcher ein Maschinenträger 130 angeordnet ist, welcher von der Grundplatte 126 durch Beabstandungselemente 128 beabstandet ist. Auf dem Maschinenträger 130 ist ein Antrieb 114 angeordnet, welcher ein Schneidmesser 134 rotatorisch antreibt. Der Granulator 104 weist darüber hinaus eine Schutzhaube 116 auf. Die Spannelemente 132, 132` sind jeweils an einem Lagerelement 144, 144' gelagert. Das Spannmittel 110 weist ferner einen mit den Spannelementen 132, 132` verbundenen Spannhebel 142 zur Betätigung der Spannelemente 132, 132' auf. Der Granulator 104 ist eine erste Baugruppe 136; die Schneidkammer 106 ist eine zweite Baugruppe 138.

Die Schneidkammer 106 weist einen Einlass für Prozesswasser 120 auf, welcher der Schneidkammer 106 Prozesswasser zuführt, sowie einen Auslass für Prozesswasser und Granulat 118, aus welchem Prozesswasser und Granulat aus der Schneidkammer 106 austreten. In Figur 7 sind Granulator 104 sowie Schneidkammer 106 separiert voneinander dargestellt. Wartungsarbeiten an dem Granulator 104 und/oder der Schneidkammer 106 können in der gezeigten Betriebsposition vorgenommen werden.

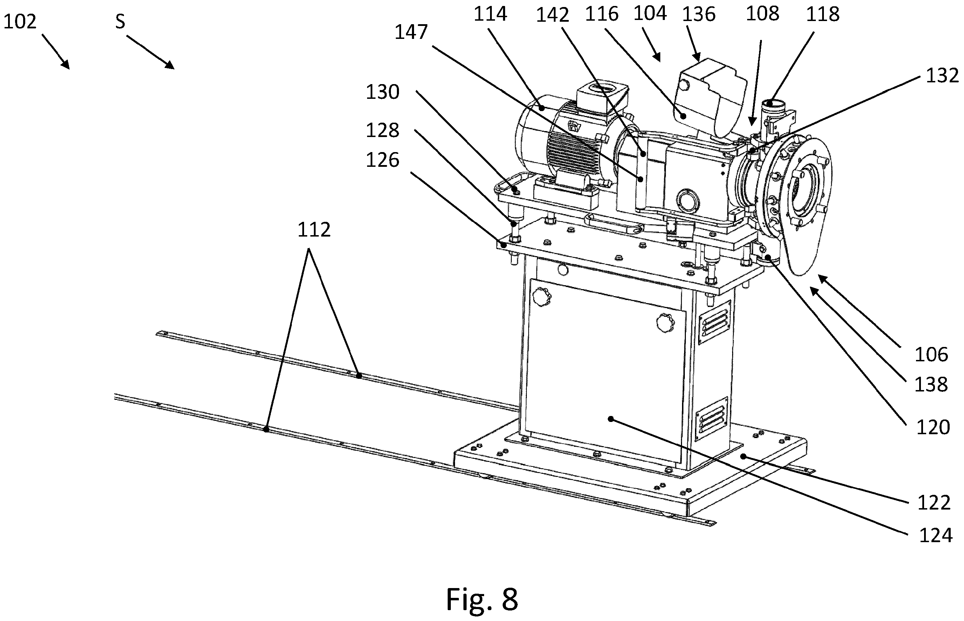

In Figur 8 sind die mit Bezug zu Figur 7 beschriebenen Komponenten in einer Spannposition S gezeigt. Der Granulator 104 ist nunmehr gekoppelt mit der Schneidkammer 106. Die Spannelemente 32, 32' (vgl. Figur 7) befinden sich in der Spannposition S. Die Spannelemente 132, 132` stehen mit Verriegelungselementen 140, 140' (vgl. Figur 9) in Eingriff und verspannen die erste Baugruppe 136 mit der zweiten Baugruppe 138.

Figur 9 zeigt eine Draufsicht auf die Granuliervorrichtung 102. In Bezug auf die Schneidkammer 106 ist nunmehr das an deren Oberseite angeordnete Verriegelungselement 140 erkennbar. Das Verriegelungselement 140 weist einen Außenquerschnitt 141 auf. Bezugnehmend auf den Granulator 104 sind die von oben sichtbaren Bauteile der Schnellspannvorrichtung 108, umfassend das Spannmittel 110, erkennbar. Das Spannelement 132 ist drehbar um eine Drehachse D an einem Lagerelement 144 gelagert. Das Spannelement 132 weist einen hakenförmigen Abschnitt 150 auf. Dieser hakenförmige Abschnitt 150 ist derart korrespondierend zu dem Außenquerschnitt des Verriegelungselements 141 ausgebildet, dass dieser beim Verschwenken des Spannelements 132 in die Spannposition S mit dem Verriegelungselement 140 in Eingriff tritt und das Verriegelungselement 140 gegen das Spannelement 132 in der Spannposition S verspannt.

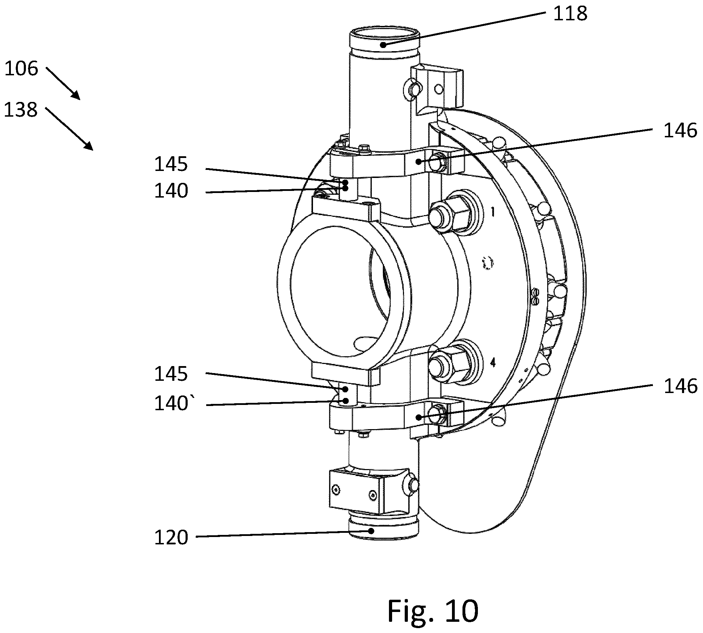

In Figur 10 ist die Schneidkammer 106, welche die zweite Baugruppe 138 darstellt, in einer Detailansicht gezeigt. In bekannter Weise weist die Schneidkammer 106 den Einlass für Prozesswasser 120 sowie den Auslass für Prozesswasser und Granulat 118 auf. Jeweils benachbart zu dem Auslass 118 beziehungsweise dem Einlass 120 sind Bolzenhalter 146 angeordnet. An den Bolzenhaltern 146 ist jeweils ein Verriegelungselement 140, 140' angeordnet. Mit den Verriegelungselementen 140, 140' treten die Spannelemente 132, 132` (vgl. Figur 7) in der Spannposition S in Eingriff.

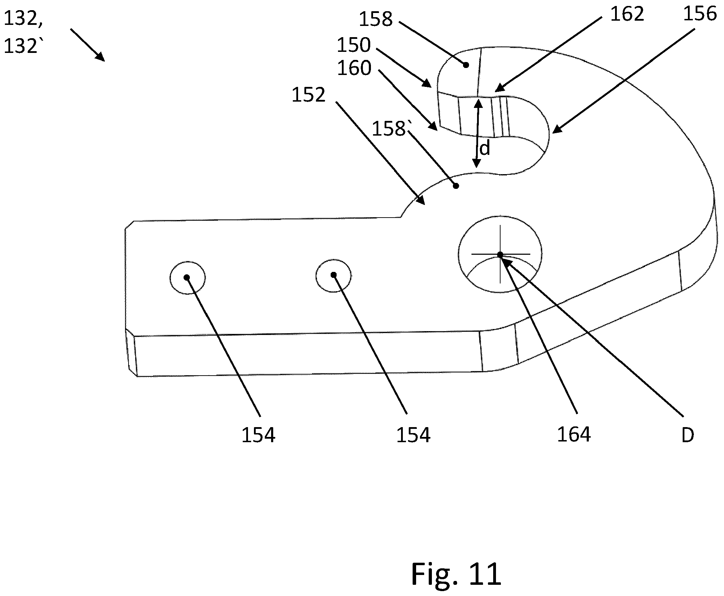

Figur 11 zeigt das Spannelement 132, 132' in einer Detailansicht. Das Spannelement 132, 132` weist Gewindebohrungen 154 auf, zur Befestigung des Spannelements 132, 132' an dem Spannhebel 142. Das Spannelement 132, 132' weist den hakenförmigen Abschnitt 150 auf. Der hakenförmige Abschnitt 150 weist ein Hakengrund 156 auf, wobei der Hakengrund 156 korrespondierend zu dem Außenquerschnitt 141 des Verriegelungselements 140 (vgl. Figur 10) ausgebildet ist. Die Verriegelungselemente 140, 140' sind als Bolzen 145 ausgebildet. Der hakenförmige Abschnitt 150 weist ferner einen ersten Schenkel 158 und einen zweiten Schenkel 158` auf. Die Schenkel 158, 158' erstrecken sich von dem Hakengrund 156 aus und bilden ein Hakenmaul 160 aus. Das Hakenmaul 160 bildet einen freien Querschnitt d zwischen den Schenkeln 158, 158' aus. Der freie Querschnitt d weitet sich ausgehend von dem Hakengrund 156 in Richtung der Schenkel 158, 158` auf.

Der erste Schenkel 158 weist eine Verdickung 162 auf. Die Verdickung 162 ist benachbart zu dem Hakengrund 156 angeordnet. Die Verdickung 162 ist dazu eingerichtet, das Verriegelungselement 140, 140' (vgl. Figur 8) in der Spannposition S zu halten. Der erste Schenkel 158 kann alternativ derart winklig, insbesondere flachwinklig, ausgebildet sein, dass er das Verriegelungselement 140, 140' (vgl. Figur 8) in selbsthemmender Weise in der Spannposition S hält. Das Spannelement 132, 132' weist ferner einen exzentrischen Abschnitt 152 auf. Der exzentrische Abschnitt 152 ist derart ausgebildet, dass dieser beim Bewegen des Spannelements 132, 132' aus der Spannposition S heraus eine Kraft auf das Verriegelungselement 140, 140' aufbringt (vgl. Figur 8). Der exzentrische Abschnitt 152 weist einen Flächenmittelpunkt 164 auf, welcher mit der Drehachse D des Spannelements 132, 132` korrespondiert. Der Schenkel 158` ist durch den exzentrischen Abschnitt 152 ausgebildet.

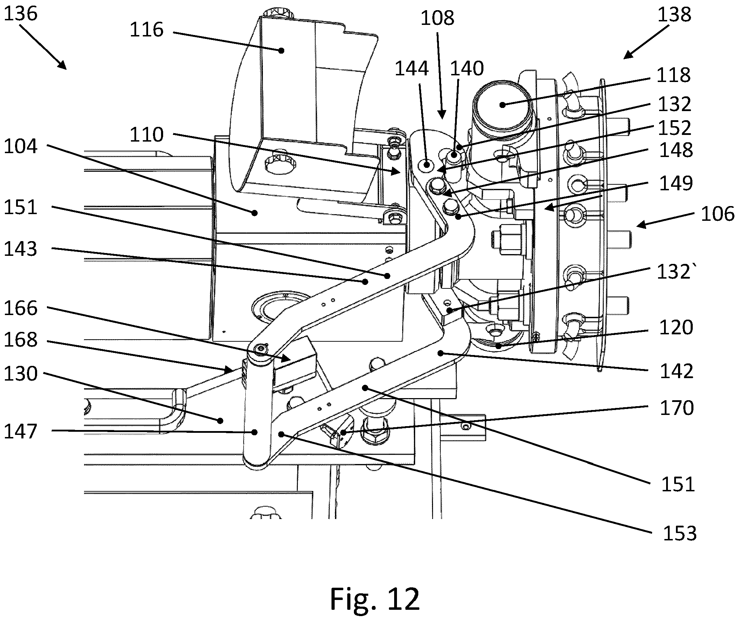

Figur 12 zeigt die Schneidkammer 106 sowie die Schnellspannvorrichtung 108 in einem gekoppelten, jedoch noch nicht vollständig verspannten Zustand. Die Spannelemente 132, 132` stehen in Eingriff mit den Verriegelungselementen 140, 140' (unteres Verriegelungselement 140' nicht sichtbar). Wird der Spannhebel 142 ausgehend von der in der Figur 12 gezeigten Position in Richtung des Granulators 104 bewegt, tritt das Spannelement 132 mit dem Verriegelungselement 140 weiter in Eingriff und verspannt die erste Baugruppe 136 mit der zweiten Baugruppe 138. Wird der Spannhebel 142 jedoch in die entgegengesetzte Richtung von dem Granulator 104 weg in Richtung der Schneidkammer 106 bewegt, so drückt der exzentrische Abschnitt 152 des Spannelements 132 das Verriegelungselement 140 weg von dem Granulator 104. Dies hat zur Folge, dass der Granulator 104, der beweglich gelagert ist, von der ortsfest angeordneten Schneidkammer 106 weggedrückt wird. Auf diese Weise wird eine Entkopplung der ersten Baugruppe 136 von der zweiten Baugruppe 138 durch eine Bewegung des Spannhebels 142 erleichtert.

Der Granulator 104 weist eine Sensorvorrichtung 166 auf, welche dazu eingerichtet ist, die Position des Spannhebels 142 zu sensieren. Darüber hinaus weist der Granulator 104 eine elektromechanische Verriegelungseinrichtung 168 auf, die dazu eingerichtet ist, ein Verriegelungsmittel 170 selektiv zu halten oder freizugeben, wenn sich das Spanmittel 110 in der Spannposition S befindet.

Den Figuren, insbesondere den Figuren 3, 4, 6, 9 und 12 sind für beide Ausführungsbeispiele weitere Merkmale der Spannhebel entnehmbar. Der Spannhebel 42, 142 weist zwei beabstandete Spannhebelschenkel (43, 143) und einen die Spannhebelschenkel (43, 143) verbindenden Handgriff (47, 147) auf.

Der Spannhebel (42, 142), insbesondere dessen zwei beabstandete Spannhebelschenkel (43, 143), hat einen mit dem Spannelement (32, 32', 132, 132') gekoppelten ersten Spannhebelabschnitt (49, 149) und einen sich winklig zu dem ersten Spannhebelabschnitt (49, 149) erstreckenden zweiten Spannhebelabschnitt (51, 151) und vorzugsweise einen sich winklig zu dem zweiten Spannhebelabschnitt (51, 151) erstreckenden dritten Spannhebelabschnitt (53, 153), an dessen distalen Ende der Handgriff (47, 147) befestigt ist. Der Spannhebel (42, 142) ist so an der ersten Baugruppe (36, 136) oder der zweiten Baugruppe (38, 138) der Granuliervorrichtung (2, 102) schwenkbar gelagert, dass der Spannhebel (42, 142) nach Art eines Kniehebels beim Verspannen über einen toten Punkt hinausgelangt und eine selbsthemmende Verspannung entsteht.

Wie beispielsweise Figur 3 und 9 gut entnehmbar ist, ist der erste Spannhebelabschnitt 49 kürzer als und in einem Winkel von ungefähr 90° relativ zu dem zweiten Spannhebelabschnitt 51, 151 ausgebildet. Der erste Spannhebelabschnitt 49, 149 ist mittels der Gewindebohrungen 54 mit dem Spannelement 32, 32', 132, 132' vorzugsweise lösbar verbunden. Der Winkel zwischen erstem und zweitem Spannhebelabschnitt 49, 149, 51, 151 und auch die jeweiligen Längen in jeweils axialer Richtung könnten verschiedene Wertebereiche annehmen und variieren. Der Winkel zwischen zweitem Spannhebelabschnitt 49, 149, 51, 151 und dritten Spannhebelabschnitt 53, 153 ist deutlich größer als 90°, im Ausführungsbeispiel etwa im Bereich von 170°, es könnte jedoch auch ein Winkelbereich von beispielsweise zwischen 180° und 90° verwirklicht sein. Der dritte Spannhebelabschnitt 53, 153 ist so gewählt, dass der an den beiden Spannhebelabschnitten 49, 149 befestigte Handgriff 47, 147 gut gegriffen werden kann, auch und insbesondere in der Spannposition S, sodass eine Hand oder Finger zwischen den Handgriff 47, 147 und der gegenüberliegenden Baugruppe, insbesondere einem Granulator 4, 104 oder einer Schneidkammer 6, 106 gelangen kann und die Hand nicht eingeklemmt wird. Ganz grob haben die Spannhebelschenkel in der Draufsicht (Figur 3, Figur 9) Ähnlichkeit mit einer S-Form.

Das erfindungsgemäße Verfahren und die Betriebsweise der Schnellspannvorrichtung und deren Komponenten sind nachfolgend weiter erläutert:
Zum Verspannen eines exemplarischen Granulators 4, 104 mit einer Schneidkammer 6, 106 (auch andere Baugruppen sind erfindungsgemäß inkludiert) werden zunächst der Granulator 4, 104 und die Schneidkammer 6, 106 relativ zueinander bereitgestellt (Figuren 1, 3, 6, 9 und 12). Dann wird die Schnellspannvorrichtung betätigt, entweder mithilfe von Antriebsmitteln oder manuell, sodass die Spannmittel 10, 110 mit Spannelement 32, 132 relativ zu dem Verriegelungselement 40, 140 in Eingriff kommen und die erste und zweite Baugruppe 36, 136; 38, 138 relativ zueinander verspannt werden. Während dieser Rotationsbewegung, im Ausführungsbeispiel durch Betätigung des Handgriffs 47, 147, gelangt der Spannhebel, der nach Art eines Kniehebels ausgebildet ist, über einen toten Punkt, in welchem die relative Verspannung maximal ist, und gelangt dann durch weitere Rotation über diesen toten Punkt hinaus, währenddessen die Verspannung etwas abnimmt. Dadurch wird eine selbsthemmende Verspannung in diesem Bereich erzielt. In der Spannposition ist der Handgriff 47, 147 mit einem minimalen Abstand angeordnet in Relation zu der Granuliervorrichtung 2, 102. Der Abstand ist so gewählt aufgrund der zuvor beschriebenen Gestaltung, dass eine Hand zwischen Granuliervorrichtung 2, 102 und Handgriff 47, 147 greifen kann, ohne eingeklemmt zu werden. Zum Entspannen wird das Spannelement 32, 32`, 132, 132` entgegengesetzt rotiert und während der Rotation in diese Richtung wird durch den exzentrischen Abschnitt 52, 152 des Spannelements 32, 32`, 132, 132' eine Kraft auf das Verriegelungselement 40, 40`, 140, 140' aufgebracht, sodass die erste und zweite Baugruppe 36, 136; 38, 138 relativ zueinander entspannt und vorzugsweise wenigstens teilweise voneinander distanziert werden.

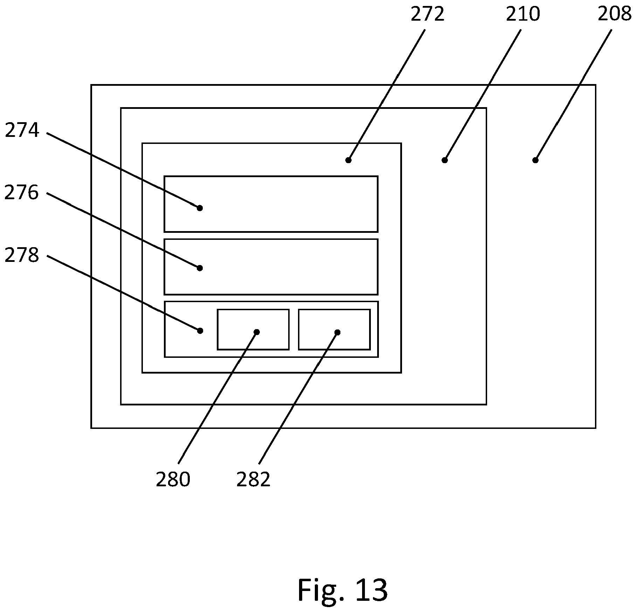

Figur 13 zeigt ein Blockschaltbild eines weiteren Ausführungsbeispiels einer Schnellspannvorrichtung 208. Die Schnellspannvorrichtung 208 weist ein Spannmittel 210 auf. An dem Spannmittel 210 ist eine Antriebsvorrichtung 272 angeordnet. Die Antriebsvorrichtung 272 dient zum Antreiben des Spannmittels 210. Die Antriebsvorrichtung 272 weist einen Elektrorotor 274, einen hydraulischen Aktuator 276 und/oder einen pneumatischen Antrieb 278 auf. Der pneumatische Antrieb 278 weist einen Zylinderantrieb 280 und/oder einen Drehantrieb 282 auf.

### Bezugszeichenliste

- 2: Granuliervorrichtung
- 4: Granulator
- 6: Schneidkammer
- 8: Schnellspannvorrichtung
- 10: Spannmittel
- 12: Granulatorschienen
- 14: Antrieb
- 16: Schutzhaube
- 18: Auslass für Prozesswasser und Granulat
- 20: Einlass für Prozesswasser
- 22: Bodenabschnitt
- 24: Gehäuse
- 26: Grundplatte
- 28: Beabstandungselemente
- 30: Maschinenträger
- 32, 32': Spannelement
- 34: Schneidmesser
- 36: Erste Baugruppe
- 38: Zweite Baugruppe
- 40, 40': Verriegelungselement
- 41: Außenquerschnitt des Verriegelungselements
- 42: Spannhebel
- 43: Spannhebelschenkel
- 44,44': Lagerelement
- 45: Bolzen
- 46: Bolzenhalter
- 47: Handgriff
- 48: Verbindungsschrauben
- 49: erster Spannhebelabschnitt
- 50: hakenförmiger Abschnitt
- 51: zweiter Spannhebelabschnitt
- 52: Exzentrischer Abschnitt
- 53: dritter Spannhebelabschnitt
- 54: Gewindebohrungen
- 56: Hakengrund
- 58, 58': Erster Schenkel, zweiter Schenkel
- 60: Hakenmaul
- 62: Verdickung
- 64: Flächenmittelpunkt
- 66: Sensorvorrichtung
- 68: Elektromechanische Verriegelungseinrichtung
- 70: Verriegelungsmittel
- 102: Granuliervorrichtung
- 104: Granulator
- 106: Schneidkammer
- 108: Schnellspannvorrichtung
- 110: Spannmittel
- 112: Granulatorschienen
- 114: Antrieb
- 116: Schutzhaube
- 118: Auslass für Prozesswasser und Granulat
- 120: Einlass für Prozesswasser
- 122: Bodenabschnitt
- 124: Gehäuse
- 126: Grundplatte
- 128: Beabstandungselemente
- 130: Maschinenträger
- 132, 132': Spannelement
- 134: Schneidmesser
- 136: Erste Baugruppe
- 138: Zweite Baugruppe
- 140, 140': Verriegelungselement
- 141: Außenquerschnitt des Verriegelungselements
- 142: Spannhebel
- 143: Spannhebelschenkel
- 144, 144': Lagerelement
- 145: Bolzen
- 146: Bolzenhalter
- 147: Handgriff
- 148: Verbindungsschrauben
- 149: erster Spannhebelabschnitt
- 150: hakenförmiger Abschnitt
- 151: zweiter Spannhebelabschnitt
- 152: Exzentrischer Abschnitt
- 153: dritter Spannhebelabschnitt
- 154: Gewindebohrungen
- 156: Hakengrund
- 158, 158': Erster Schenkel, zweiter Schenkel
- 160: Hakenmaul
- 162: Verdickung
- 164: Flächenmittelpunkt
- 166: Sensorvorrichtung
- 168: Elektromechanische Verriegelungseinrichtung
- 170: Verriegelungsmittel
- 208: Schnellspannvorrichtung
- 210: Spannmittel
- 272: Antriebsvorrichtung
- 274: Elektromotor
- 276: Hydraulischer Aktuator
- 278: pneumatischer Antrieb
- 280: Zylinderantrieb
- 282: Drehantrieb
- d: freier Querschnitt
- D: Drehachse
- S: Spannposition

## Patentansprüche

1. Schnellspannvorrichtung (8, 108) zum Verspannen einer ersten Baugruppe (36, 136) einer Granuliervorrichtung (2, 102) mit einer zweiten Baugruppe (38, 138) der Granuliervorrichtung (2, 102), insbesondere eines Granulators (4, 104) mit einer Schneidkammer (6, 106) oder einer Schneidkammer (6, 106) mit einer Lochplatte, wobei die Schnellspannvorrichtung (8, 108) aufweist:
- ein Lagerelement (44, 144), welches an der ersten Baugruppe (36, 136) oder der zweiten Baugruppe (38, 138) angeordnet ist,
- ein Verriegelungselement (40, 140), welches an der anderen der ersten Baugruppe (36, 136) oder der zweiten Baugruppe (38, 138) angeordnet ist,
- ein Spannmittel (10, 110) mit einem Spannelement (32, 132), wobei das Spannelement (32, 132) drehbar um eine Drehachse (D) an dem Lagerelement (44, 144) gelagert ist, und das Spannelement (32, 132) dazu eingerichtet ist, in eine Spannposition (S) verschwenkt zu werden, in welcher das Spannelement (32, 132) mit dem Verriegelungselement (40, 140) in Eingriff steht und die erste Baugruppe (36, 136) gegen die zweite Baugruppe (38, 138) verspannt,
**dadurch gekennzeichnet, dass** das Spannelement (32, 32', 132, 132') ferner einen exzentrischen Abschnitt (52, 152) aufweist, wobei der exzentrische Abschnitt (52, 152) derart ausgebildet ist, dass dieser beim Bewegen des Spannelements (32, 32', 132, 132') aus der Spannposition (S) heraus eine Kraft auf das Verriegelungselement (40, 40', 140, 140') aufbringt, welche die erste Baugruppe (36, 136) von der zweiten Baugruppe (38, 138) separiert.

2. Schnellspannvorrichtung (8, 108) nach Anspruch 1,
**gekennzeichnet durch**
- ein zweites Lagerelement (44', 144'), welches an derselben Baugruppe (36, 38, 136, 138) angeordnet ist wie das erste Lagerelement (44, 144),
- ein zweites Verriegelungselement (40', 140'), welches an derselben Baugruppe (36, 38, 136, 138) angeordnet ist wie das erste Verriegelungselement (40, 140),
wobei das Spannmittel (10, 110) ein zweites Spannelement (32', 132') aufweist, welches drehbar um eine zweite Drehachse (D) an dem zweiten Lagerelement (44', 144') gelagert ist, und das zweite Spannelement (32', 132') dazu eingerichtet ist, zusammen mit dem ersten Spannelement (32, 132) in die Spannposition (S) verschwenkt zu werden, in welcher das zweite Spannelement (32', 132') mit dem zweiten Verriegelungselement (40', 140') in Eingriff steht.

3. Schnellspannvorrichtung (8, 108) nach einem der vorstehenden Ansprüche, **dadurch gekennzeichnet, dass** das Spannmittel (10, 110) ferner einen mit dem wenigstens einen Spannelement (32, 32', 132, 132') verbundenen Spannhebel (42, 142) zur Betätigung des wenigstens einen Spannelements (32, 32', 132, 132') aufweist.

4. Schnellspannvorrichtung (8, 108) nach einem der vorstehenden Ansprüche, **dadurch gekennzeichnet, dass** das wenigstens eine Spannelement (32, 32', 132, 132') einen hakenförmigen Abschnitt (50, 150) aufweist, wobei der hakenförmige Abschnitt (50, 150) dazu eingerichtet ist, beim Verschwenken des Spannelements (32, 32', 132, 132') in die Spannposition (S) mit dem Verriegelungselement (40, 40', 140, 140') in Eingriff zu treten und das Verriegelungselement (40, 40', 140, 140') gegen das Spannelement (32, 32', 132, 132') in der Spannposition (S) zu verspannen.

5. Schnellspannvorrichtung (8, 108) nach Anspruch 4,
**dadurch gekennzeichnet, dass** der hakenförmige Abschnitt (50, 150) einen Hakengrund (56, 156) aufweist, wobei der Hakengrund (56, 156) korrespondierend zu einem Außenquerschnitt (41, 141) des Verriegelungselements (40, 40', 140, 140') ausgebildet ist.

6. Schnellspannvorrichtung (8, 108) nach Anspruch 4 oder Anspruch 5,
**dadurch gekennzeichnet, dass** der hakenförmige Abschnitt (50, 150) einen ersten Schenkel (58, 158) und einen zweiten Schenkel (58', 158') aufweist, wobei sich die Schenkel (58, 58', 158, 158') von dem Hakengrund (56, 156) aus erstrecken und ein Hakenmaul (60, 160) ausbilden, und wobei das Hakenmaul (60, 160) einen freien Querschnitt (d) zwischen den Schenkeln (58, 58', 158, 158') ausbildet, welcher sich ausgehend von dem Hakengrund (56, 156) in Richtung der Schenkel (58, 58', 158, 158') aufweitet.

7. Schnellspannvorrichtung (8, 108) nach Anspruch 6,
**dadurch gekennzeichnet, dass** der erste Schenkel (58, 158)) und/oder der zweite Schenkel (58'; 158') eine Verdickung (62, 162) aufweisen, welche benachbart zu dem Hakengrund (56, 156) angeordnet ist, und welche dazu eingerichtet ist, das Verriegelungselement (40, 40', 140, 140') in der Spannposition (S) zu halten.

8. Schnellspannvorrichtung (8, 108) nach einem der vorstehenden Ansprüche, **dadurch gekennzeichnet, dass** der exzentrische Abschnitt (52, 152) einen Flächenmittelpunkt (64, 164) aufweist, welcher mit der Drehachse (D) des Spannelements (32, 32', 132, 132') korrespondiert.

9. Schnellspannvorrichtung (8, 108) nach einem der Ansprüche 6-8,
**dadurch gekennzeichnet, dass** einer der Schenkel (58, 58', 158, 158') durch den exzentrischen Abschnitt (52, 152) ausgebildet ist.

10. Schnellspannvorrichtung (8, 108) nach einem der vorstehenden Ansprüche, **dadurch gekennzeichnet, dass** das Verriegelungselement (40, 40', 140, 140') und/oder das Lagerelement (44, 44', 144, 144') als Bolzen (45, 145) ausgebildet ist.

11. Schnellspannvorrichtung (208) nach einem der vorstehenden Ansprüche, **gekennzeichnet durch** eine Antriebsvorrichtung (272) zum Antreiben des Spannmittels (210), wobei die Antriebsvorrichtung (272) insbesondere wenigstens eines der folgenden aufweist oder daraus ausgebildet ist:
- Elektromotor (274)
- hydraulischer Aktuator (276),
- pneumatischer Antrieb (278), insbesondere aufweisend einen Zylinderantrieb (280) und/oder einen Drehantrieb (282).

12. Schnellspannvorrichtung (8, 108) nach einem der vorstehenden Ansprüche, **gekennzeichnet durch** eine Sensorvorrichtung (66, 166) zur Sensierung der Position des Spannmittels (10, 110).

13. Schnellspannvorrichtung (8, 108) nach Anspruch 12,
**dadurch gekennzeichnet, dass** die Sensorvorrichtung (66, 166) an dem Granulator (4, 104) angeordnet ist und/oder dazu eingerichtet ist, ein Signal zu generieren, wenn sich das Spannmittel (10, 110) in der Spannposition (S) befindet und/oder aus dieser heraus bewegt wird.

14. Schnellspannvorrichtung (8, 108) nach einem der vorstehenden Ansprüche, **gekennzeichnet durch** ein Verriegelungsmittel (68, 168), insbesondere ein elektromechanisches Verriegelungsmittel (68, 168), welches dazu eingerichtet ist, dass Spannmittel (10, 110) in der Spannposition (S) zu halten und/oder aus der Spannposition (S) freizugeben.

15. Schnellspannvorrichtung (8, 108) nach einem der vorstehenden Ansprüche 3 - 14, **dadurch gekennzeichnet, dass** der Spannhebel (42, 142) zwei beabstandete Spannhebelschenkel (43, 143) und einen die Spannhebelschenkel (43, 143) verbindenden Handgriff (47, 147) aufweist.

16. Schnellspannvorrichtung (8, 108) nach einem der vorstehenden Ansprüche 3 - 15, **dadurch gekennzeichnet, dass** der Spannhebel (42, 142), insbesondere dessen zwei beabstandete Spannhebelschenkel (43, 143), einen mit dem Spannelement (32, 32', 132, 132') gekoppelten ersten Spannhebelabschnitt (49, 149) und einen sich winklig zu dem ersten Spannhebelabschnitt (49, 149) erstreckenden zweiten Spannhebelabschnitt (51, 151) und vorzugsweise einen sich winklig zu dem zweiten Spannhebelabschnitt (51, 151) erstreckenden dritten Spannhebelabschnitt (51, 151) aufweist, an dessen distalen Ende der Handgriff (47, 147) befestigt ist.

17. Schnellspannvorrichtung (8, 108) nach einem der vorstehenden Ansprüche 3 - 16, **dadurch gekennzeichnet, dass** der Spannhebel (42, 142) so an der ersten Baugruppe (36, 136) oder der zweiten Baugruppe (38, 138) der Granuliervorrichtung (2, 102) schwenkbar gelagert ist, dass der Spannhebel (42, 142) nach Art eines Kniehebels beim Verspannen über einen toten Punkt hinausgelangt und eine selbsthemmende Verspannung entsteht.

18. Granuliervorrichtung (2, 102) zur Herstellung von Granulat aus einem Schmelzefluss, mit einem Granulator (4, 104) und einer Schneidkammer (6, 106),
**gekennzeichnet durch** eine Schnellspannvorrichtung (8, 108, 208) nach mindestens einem der Ansprüche 1 - 17.

19. Verfahren zum Verspannen einer ersten Baugruppe (36, 136) einer Granuliervorrichtung (2, 102) mit einer zweiten Baugruppe (38, 138) der Granuliervorrichtung (2, 102), insbesondere eines Granulators (4, 104) mit einer Schneidkammer (6, 106) oder einer Schneidkammer (6, 106) mit einer Lochplatte, umfassend die Schritte:
- Bereitstellen der ersten Baugruppe (36, 136), insbesondere eines Granulators (4, 104) oder einer Lochplatte;
- Bereitstellen der zweiten Baugruppe (38, 138), insbesondere einer Schneidkammer (6, 106);
- Verspannen der ersten Baugruppe (36, 136) mit der zweiten Baugruppe (38, 138) mittels einer Schnellspannvorrichtung (8, 108, 208), wobei die Schnellspannvorrichtung (8, 108, 208) nach mindestens einem der Ansprüche 1 - 17 ausgebildet ist.

20. Verfahren nach Anspruch 19,
bei dem das Spannmittel (10, 110) mittels eines mit dem wenigstens einen Spannelement (32, 32', 132, 132') verbundenen Spannhebel (42, 142) betätigt wird,
und der Spannhebel (42, 142) an der ersten Baugruppe (36, 136) oder der zweiten Baugruppe (38, 138) der Granuliervorrichtung (2, 102) nach Art eines Kniehebels schwenkbar gelagert ist und zum Verspannen über einen toten Punkt hinaus rotiert wird und eine selbsthemmende Verspannung entsteht.

21. Verfahren nach mindestens einem der Ansprüche 19 oder 20,
wobei das Spannelement (32, 32', 132, 132') ferner einen exzentrischen Abschnitt (52, 152) aufweist, der ausgebildet ist, dass dieser beim Bewegen des Spannelements (32, 32', 132, 132') aus der Spannposition (S) heraus eine Kraft auf das Verriegelungselement (40, 40', 140, 140') aufbringt, welche die erste Baugruppe (36, 136) von der zweiten Baugruppe (38, 138) separiert,
bei dem zum Entspannen das Spannelement bewegt, vorzugsweise rotiert wird, und durch den exzentrischen Abschnitt (52, 152) eine Kraft auf das Verriegelungselement (40, 40', 140, 140') aufgebracht wird und dadurch die erste Baugruppe (36, 136) von der zweiten Baugruppe (38, 138) entspannt, vorzugsweise mindestens etwas distanziert wird.

22. Spannhebel (42, 142), welcher mit einem Spannelement (32, 32', 132, 132') koppelbar ist zur Betätigung des Spannelements (32, 32', 132, 132') einer Schnellspannvorrichtung (8, 108) nach einem der Ansprüche 1 bis 17 zum Verspannen einer ersten Baugruppe (36, 136) einer Granuliervorrichtung (2, 102) mit einer zweiten Baugruppe (38, 138) der Granuliervorrichtung (2, 102),
**dadurch gekennzeichnet, dass** der Spannhebel (42, 142) zwei beabstandete Spannhebelschenkel (43, 143) und einen die Spannhebelschenkel (43, 143) verbindenden Handgriff (47, 147) aufweist.

23. Spannhebel (42, 142) nach Anspruch 22, welcher mit dem Spannelement (32, 32', 132, 132') koppelbar ist zur Betätigung des Spannelements (32, 32', 132, 132') der Schnellspannvorrichtung (8, 108) zum Verspannen der ersten Baugruppe (36, 136) der Granuliervorrichtung (2, 102) mit der zweiten Baugruppe (38, 138) der Granuliervorrichtung (2, 102), **dadurch gekennzeichnet, dass** der Spannhebel (42, 142), insbesondere dessen zwei beabstandete Spannhebelschenkel (43, 143), einen mit dem Spannelement (32, 32', 132, 132') gekoppelten ersten Spannhebelabschnitt (49, 149) und einen sich winklig zu dem ersten Spannhebelabschnitt (49, 149) erstreckenden zweiten Spannhebelabschnitt (51, 151) aufweist.

24. Spannhebel (42, 142) nach einem der vorstehenden Ansprüche 22 oder 23, **gekennzeichnet durch** einen sich winklig zu dem zweiten Spannhebelabschnitt (51, 151) erstreckenden dritten Spannhebelabschnitt (51, 151), an dessen distalen Ende ein Handgriff (47, 147) befestigt ist.

25. Spannhebel (42, 142) nach mindestens einem der vorstehenden Ansprüche 22 bis 24, **dadurch gekennzeichnet, dass** der Spannhebel (42, 142) so an der ersten Baugruppe (36, 136) oder der zweiten Baugruppe (38, 138) der Granuliervorrichtung (2, 102) schwenkbar gelagert ist, dass der Spannhebel (42, 142) nach Art eines Kniehebels beim Verspannen über einen toten Punkt hinausgelangt und eine selbsthemmende Verspannung entsteht.

## Claims

1. Quick-action clamping apparatus (8, 108) for bracing a first assembly (36, 136) of a pelletizing apparatus (2, 102) to a second assembly (38, 138) of the pelletizing apparatus (2, 102), in particular a pelletizer (4, 104) to a cutting chamber (6, 106) or a cutting chamber (6, 106) to an apertured plate, wherein the quick-action clamping apparatus (8, 108) comprises:
- a mounting element (44, 144) which is arranged at the first assembly (36, 136) or the second assembly (38, 138),
- a locking element (40, 140) which is arranged at the other of the first assembly (36, 136) or the second assembly (38, 138), and
- a clamping means (10, 110) having a clamping element (32, 132), wherein the clamping element (32, 132) is mounted rotatably about an axis of rotation (D) to the mounting element (44, 144) and the clamping element (32, 132) is adapted to be pivoted into a clamping position (S) in which the clamping element (32, 132) is in engagement with the locking element (40, 140) and braces the first assembly (36, 136) against the second assembly (38, 138),
**characterised in that** the clamping element (32, 32', 132, 132') further has an eccentric portion (52, 152), the eccentric portion (52, 152) being of such a configuration that in the movement of the clamping element (32, 32', 132, 132') out of the clamping position (S) the eccentric portion applies a force to the locking element (40, 40', 140, 140') which separates the first assembly (36, 136) from the second assembly (38, 138).

2. Quick-action clamping apparatus (8, 108) according to claim 1
**characterised by**
- a second mounting element (44', 144') arranged at the same assembly (36, 38, 136, 138) as the first mounting element (44, 144),
- a second locking element (40', 140') arranged at the same assembly (36, 38, 136, 138) as the first locking element (40, 140),
wherein the clamping means (10, 110) has a second clamping element (32', 132') which is mounted rotatably about a second axis of rotation (D) to the second mounting element (44', 144') and the second clamping element (32', 132') is adapted together with the first clamping element (32, 132) to be pivoted into the clamping position (S) in which the second clamping element (32', 132') is in engagement with the second locking element (40', 140').

3. Quick-action clamping apparatus (8, 108) according to one of the preceding claims **characterised in that** the clamping means (10, 110) further has a clamping lever (42, 142) connected to the at least one clamping element (32, 32', 132, 132') for actuating the at least one clamping element (32, 32', 132, 132').

4. Quick-action clamping apparatus (8, 108) according to one of the preceding claims
**characterised in that** the at least one clamping element (32, 32', 132, 132') has a hooked portion (50, 150), wherein the hooked portion (50 150) is adapted upon the pivotal movement of the clamping element (32, 32', 132, 132') into the clamping position (S) to come into engagement with the locking element (40, 40', 140, 140') and to brace the locking element (40, 40', 140, 140') against the clamping element (32, 32', 132, 132') in the clamping position (S).

5. Quick-action clamping apparatus (8, 108) according to claim 4
**characterised in that** the hooked portion (50, 150) has a hook bottom (56, 156), wherein the hook bottom (56, 156) is of a configuration corresponding to an external cross-section (41, 141) of the locking element (40, 40', 140, 140').

6. Quick-action clamping apparatus (8, 108) according to claim 4 or claim 5
**characterised in that** the hooked portion (50, 150) has a first limb (58, 158) and a second limb (58', 158'), wherein the limbs (58, 58', 158, 158') extend from the hook bottom (56, 156) and form a hook mouth (60, 160) and wherein the hook mouth (60, 160) forms a free cross-section (d) between the limbs (58, 58', 158, 158'), which enlarges from the hook bottom (56, 156) in the direction of the limbs (58, 58', 158, 158').

7. Quick-action clamping apparatus (8, 108) according to claim 6
**characterised in that** the first limb (58, 158) and/or the second limb (58', 158') has a thickening (62, 162) which is arranged adjacent to the hook bottom (56, 156) and is adapted to hold the locking element (40, 40', 140, 140') in the clamping position (S).

8. Quick-action clamping apparatus (8, 108) according to one of the preceding claims
**characterised in that** the eccentric portion (52, 152) has an area centroid (64, 164) corresponding to the axis of rotation (D) of the clamping element (32, 32', 132, 132').

9. Quick-action clamping apparatus (8, 108) according to one of claims 6-8
**characterised in that** one of the limbs (58, 58', 158, 158') is formed by the eccentric portion (52, 152).

10. Quick-action clamping apparatus (8, 108) according to one of the preceding claims
**characterised in that** the locking element (40, 40', 140, 140') and/or the mounting element (44, 44', 144, 144') is in the form of a pin (45, 145).

11. Quick-action clamping apparatus (208) according to one of the preceding claims
**characterised by** a drive device (272) for driving the clamping means (210), wherein the drive device (272) has or is formed from in particular at least one of the following:
- an electric motor (274),
- a hydraulic actuator (276), or
- a pneumatic drive (278), in particular having a cylinder drive (280) and/or a rotary drive (282).

12. Quick-action clamping apparatus (8, 108) according to one of the preceding claims
**characterised by** a sensor device (66, 166) for sensing the position of the clamping means (10, 110).

13. Quick-action clamping apparatus (8, 108) according to claim 12
**characterised in that** the sensor device (66, 166) is arranged at the pelletizer (4, 104) and/or is adapted to generate a signal when the clamping means (10, 110) is in the clamping position (S) and/or is moved out of same.

14. Quick-action clamping apparatus (8, 108) according to one of the preceding claims
**characterised by** a locking means (68, 168), in particular an electromechanical locking means (68, 168), adapted to hold the clamping means (10, 110) in the clamping position (S) and/or to release same from the clamping position (S).

15. Quick-action clamping apparatus (8, 108) according to one of preceding claims 3 to 14
**characterised in that** the clamping lever (42, 142) has two spaced clamping lever limbs (43, 143) and a handle (47, 147) connecting the clamping lever limbs (43, 143).

16. Quick-action clamping apparatus (8, 108) according to one of preceding claims 3 to 15
**characterised in that** the clamping lever (42, 142), in particular its two spaced clamping lever limbs (43, 143) has a first clamping lever portion (49, 149) coupled to the clamping element (32, 32', 132, 132') and a second clamping lever portion (51, 151) extending at an angle relative to the first clamping lever portion (49, 149) and preferably a third clamping lever portion (53, 153) which extends at an angle relative to the second clamping lever portion (51, 151) and at the distal end of which the handle (47, 147) is fixed.

17. Quick-action clamping apparatus (8, 108) according to one of preceding claims 3 to 16
**characterised in that** the clamping lever (42, 142) is mounted pivotably to the first assembly (36, 136) or the second assembly (38, 138) of the pelletizing apparatus (2, 102) in such a way that the clamping lever (42, 142) moves beyond a dead centre point in the manner of a toggle lever in the bracing operation and self-locking clamping ensues.

18. Pelletizing apparatus (2, 102) for the production of pellets from a melt flow comprising a pelletizer (4, 104) and a cutting chamber (6, 106),
**characterised by** a quick-action clamping apparatus (8, 108, 208) in accordance with at least one of claims 1 to 17.

19. Method of bracing a first assembly (36, 136) of a pelletizing apparatus (2, 102) to a second assembly (38, 138) of the pelletizing apparatus (2, 102), in particular a pelletizer (4, 104) to a cutting chamber (6, 106) or a cutting chamber (6, 106) to an apertured plate, including the steps:
- providing the first assembly (36, 136), in particular a pelletizer (4, 104) or an apertured plate;
- providing the second assembly (38, 138), in particular a cutting chamber (6, 106); and
- bracing the first assembly (36, 136) to the second assembly (38, 138) by means of a quick-action clamping apparatus (8, 108, 208), wherein the quick-action clamping apparatus (8, 108, 208) is in accordance with at least one of claims 1 to 17.

20. Method according to claim 19
wherein the clamping means (10, 110) is actuated by means of a clamping lever (42, 142) connected to the at least one clamping element (32, 32', 132, 132'),
and the clamping lever (42, 142) is mounted pivotably to the first assembly (36, 136) or the second assembly (38, 138) of the pelletizing apparatus (2, 102) in the manner of a toggle lever and is rotated beyond a dead centre point for the bracing effect and a self-locking bracing effect ensues.

21. Method according to at least one of claims 19 or 20
wherein the clamping element (32, 32', 132, 132') further has an eccentric portion (52, 152) adapted in the movement of the clamping element (32, 32', 132, 132') out of the clamping position (S) to apply a force to the locking element (40, 40', 140, 140'), that separates the first assembly (36, 136) from the second assembly (38, 138),
wherein the clamping element is moved, preferably rotated, for releasing the clamping action and a force is applied to the locking element (40, 40', 140, 140') by the eccentric portion (52, 152) and thereby the first assembly (36, 136) is released from the second assembly (38, 138) and is preferably at least somewhat spaced therefrom.

22. Clamping lever (42, 142) which can be coupled to a clamping element (32, 32', 132, 132') for actuation of the clamping element (32, 32', 132, 132') of a quick-action clamping apparatus (8, 108) according to one of claims 1 to 17 for bracing a first assembly (36, 136) of a pelletizing apparatus (2, 102) to a second assembly (38, 138) of the pelletizing apparatus (2, 102),
**characterised in that** the clamping lever (42, 142) has two spaced clamping lever limbs (43, 143) and a handle (47, 147) connecting the clamping lever limbs (43, 143).

23. Clamping lever (42, 142) according to claim 22 which can be coupled to the clamping element (32, 32', 132, 132') for actuation of the clamping element (32, 32', 132, 132') of the quick-action clamping apparatus (8, 108) for bracing the first assembly (36, 136) of a pelletizing apparatus (2, 102) to the second assembly (38, 138) of the pelletizing apparatus (2, 102),
**characterised in that** the clamping lever (42, 142), in particular the two spaced clamping lever limbs (43, 143) thereof, has a first clamping lever portion (49, 149) coupled to the clamping element (32, 32', 132, 132') and a second clamping lever portion (51, 151) extending at an angle relative to the first clamping lever portion (49, 149).

24. Clamping lever (42, 142) according to one of the preceding claims 22 or 23
**characterised by** a third clamping lever portion (53, 153) which extends at an angle relative to the second clamping lever portion (51, 151) and to the distal end of which a handle (47, 147) is fixed.

25. Clamping lever (42, 142) according to one of the preceding claims 22 to 24
**characterised in that** the clamping lever (42, 142) is mounted pivotably to the first assembly (36, 136) or the second assembly (38, 138) of the pelletizing apparatus (2, 102) in such a way that the clamping lever (42, 142) moves beyond a dead centre point in the bracing operation in the manner of a toggle lever and self-locking bracing esues.

## Revendications

1. Dispositif de serrage rapide (8, 108) pour assembler par serrage un premier module (36, 136) d'un dispositif de granulation (2, 102) à un deuxième module (38, 138) du dispositif de granulation (2, 102), en particulier d'un granulateur (4, 104) avec une chambre de découpe (6, 106) ou une chambre de découpe (6, 106) avec une plaque perforée, dans lequel le dispositif de serrage rapide (8, 108) présente :
- un élément de palier (44, 144), lequel est disposé sur le premier module (36, 136) ou sur le deuxième module (38, 138),
- un élément de verrouillage (40, 140), lequel est disposé sur l'autre du premier module (36, 136) ou du deuxième module (38, 138),
- un moyen de serrage (10, 110) avec un élément de serrage (32, 132), dans lequel l'élément de serrage (32, 132) est monté sur l'élément de palier (44, 144) de manière à pouvoir tourner autour d'un axe de rotation (D), et l'élément de serrage (32, 132) est mis au point pour être pivoté dans une position de serrage (S), dans laquelle l'élément de serrage (32, 132) est en prise avec l'élément de verrouillage (40, 140) et précontraint le premier module (36, 136) contre le deuxième module (38, 138),
**caractérisé en ce que** l'élément de serrage (32, 32', 132, 132') présente en outre une section excentrique (52, 152), dans lequel la section excentrique (52, 152) est réalisée de telle manière que celle-ci applique, lors du déplacement de l'élément de serrage (32, 32', 132, 132') hors de la position de serrage (S), une force sur l'élément de verrouillage (40, 40', 140, 140'), laquelle sépare le premier module (36, 136) du deuxième module (38, 138).

2. Dispositif de serrage rapide (8, 108) selon la revendication 1,
**caractérisé par**
- un deuxième élément de palier (44', 144'), lequel est disposé sur le même module (36, 38, 136, 138) que le premier élément de palier (44, 144),
- un deuxième élément de verrouillage (40', 140'), lequel est disposé sur le même module (36, 38, 136, 138) que le premier élément de verrouillage (40, 140),
dans lequel le moyen de serrage (10, 110) présente un deuxième élément de serrage (32', 132'), lequel est monté sur le deuxième élément de palier (44', 144') de manière à pouvoir tourner autour d'un deuxième axe de rotation (D), et le deuxième élément de serrage (32', 132') est mis au point pour être pivoté conjointement avec le premier élément de serrage (32, 132) dans la position de serrage (S), dans laquelle le deuxième élément de serrage (32', 132') est en prise avec le deuxième élément de verrouillage (40', 140').

3. Dispositif de serrage rapide (8, 108) selon l'une quelconque des revendications précédentes, **caractérisé en ce que** le moyen de serrage (10, 110) présente en outre un levier de serrage (42, 142) relié à l'au moins un élément de serrage (32, 32', 132, 132') pour actionner l'au moins un élément de serrage (32, 32', 132, 132') .

4. Dispositif de serrage rapide (8, 108) selon l'une quelconque des revendications précédentes,
**caractérisé en ce que** l'au moins un élément de serrage (32, 32', 132, 132') présente une section en forme de crochet (50, 150), dans lequel la section en forme de crochet (50, 150) est mise au point pour venir en prise avec l'élément de verrouillage (40, 40', 140, 140') lors du pivotement de l'élément de serrage (32, 32', 132, 132') dans la position de serrage (S) et pour précontraindre l'élément de verrouillage (40, 40', 140, 140') contre l'élément de serrage (32, 32', 132, 132') dans la position de serrage (S).

5. Dispositif de serrage rapide (8, 108) selon la revendication 4,
**caractérisé en ce que** la section en forme de crochet (50, 150) présente une base formant crochet (56, 156), dans lequel la base formant crochet (56, 156) est réalisée de manière à correspondre à une section transversale extérieure (41, 141) de l'élément de verrouillage (40, 40', 140, 140').

6. Dispositif de serrage rapide (8, 108) selon la revendication 4 ou la revendication 5,
**caractérisé en ce que** la section en forme de crochet (50, 150) présente une première branche (58, 158) et une deuxième branche (58', 158'), dans lequel les branches (58, 58', 158, 158') s'étendent depuis la base formant crochet (56, 156) et réalisent une mâchoire d'accrochage (60, 160), et dans lequel la mâchoire d'accrochage (60, 160) réalise une section transversale libre (d) entre les branches (58, 58', 158, 158'), laquelle s'élargit en partant de la base formant crochet (56, 156) en direction des branches (58, 58', 158, 158').

7. Dispositif de serrage rapide (8, 108) selon la revendication 6,
**caractérisé en ce que** la première branche (58, 158) et/ou la deuxième branche (58', 158') présentent un épaississement (62, 162), lequel est disposé de manière adjacente par rapport à la base formant crochet (56, 156), et lequel est mis au point pour maintenir l'élément de verrouillage (40, 40', 140, 140') dans la position de serrage (S).

8. Dispositif de serrage rapide (8, 108) selon l'une quelconque des revendications précédentes,
**caractérisé en ce que** la section excentrique (52, 152) présente un point central de surface (64, 164), lequel correspond à l'axe de rotation (D) de l'élément de serrage (32, 32', 132, 132').

9. Dispositif de serrage rapide (8, 108) selon l'une quelconque des revendications 6 - 8,
**caractérisé en ce qu'**une des branches (58, 58', 158, 158') est réalisée par la section excentrique (52, 152).

10. Dispositif de serrage rapide (8, 108) selon l'une quelconque des revendications précédentes,
**caractérisé en ce que** l'élément de verrouillage (40, 40', 140, 140') et/ou l'élément de palier (44, 44', 144, 144') sont réalisés en tant que boulon (45, 145).

11. Dispositif de serrage rapide (208) selon l'une quelconque des revendications précédentes, **caractérisé par** un dispositif d'entraînement (272) destiné à entraîner le moyen de serrage (210), dans lequel le dispositif d'entraînement (272) présente en particulier au moins un des éléments suivants ou est réalisé à partir d'au moins un des éléments suivants :
- moteur électrique (274)
- actionneur hydraulique (276)
- entraînement pneumatique (278), en particulier présentant un entraînement de cylindre (280) et/ou un entraînement rotatif (282).

12. Dispositif de serrage rapide (8, 108) selon l'une quelconque des revendications précédentes, **caractérisé par** un dispositif de capteur (66, 166) destiné à détecter la position du moyen de serrage (10, 110) .

13. Dispositif de serrage rapide (8, 108) selon la revendication 12,
**caractérisé en ce que** le dispositif de capteur (66, 166) est disposé sur le granulateur (4, 104), et/ou est mis au point pour générer un signal quand le moyen de serrage (10, 110) se trouve dans la position de serrage (S) et/ou est déplacé hors de celle-ci.

14. Dispositif de serrage rapide (8, 108) selon l'une quelconque des revendications précédentes, **caractérisé par** un moyen de verrouillage (68, 168), en particulier un moyen de verrouillage électromécanique (68, 168), lequel est mis au point pour maintenir le moyen de serrage (10, 110) dans la position de serrage (S) et/ou pour le libérer hors de la position de serrage (S) .

15. Dispositif de serrage rapide (8, 108) selon l'une quelconque des revendications précédentes 3 - 14, **caractérisé en ce que** le levier de serrage (42, 142) présente deux branches de levier de serrage (43, 143) tenues à distance et une poignée (47, 147) reliant les branches de levier de serrage (43, 143).

16. Dispositif de serrage rapide (8, 108) selon l'une quelconque des revendications 3 - 15, **caractérisé en ce que** le levier de serrage (42, 142), en particulier ses deux branches de levier de serrage (43, 143) tenues à distance, présente une première section de levier de serrage (49, 149) couplée à l'élément de serrage (32, 32', 132, 132') et une deuxième section de levier de serrage (51, 151) s'étendant selon un angle par rapport à la première section de levier de serrage (49, 149) et de préférence une troisième section de levier de serrage (51, 151) s'étendant selon un angle par rapport à la deuxième section de levier de serrage (51, 151) sur l'extrémité distale de laquelle la poignée (47, 147) est fixée.

17. Dispositif de serrage rapide (8, 108) selon l'une quelconque des revendications 3 - 16,
**caractérisé en ce que** le levier de serrage (42, 142) est monté de manière à pouvoir pivoter sur le premier module (36, 136) ou le deuxième module (38, 138) du dispositif de granulation (2, 102) de telle sorte que le levier de serrage (42, 142) parvient au-delà d'un point mort lors de l'assemblage par serrage à la manière d'un levier coudé et qu'un assemblage par serrage autobloquant se produit.

18. Dispositif de granulation (2, 102) de fabrication de granulat à partir d'un flux fondu, avec un granulateur (4, 104) et une chambre de découpe (6, 106),
**caractérisé par** un dispositif de serrage rapide (8, 108, 208) selon au moins l'une quelconque des revendications 1 - 17.

19. Procédé pour assembler par serrage un premier module (36, 136) d'un dispositif de granulation (2, 102) à un deuxième module (38, 138) du dispositif de granulation (2, 102), en particulier d'un granulateur (4, 104) avec une chambre de découpe (6, 106) ou une chambre de découpe (6, 106) avec une plaque perforée, comprenant les étapes :
- de fourniture du premier module (36, 136), en particulier d'un granulateur (4, 104) ou d'une plaque perforée ;
- de fourniture du deuxième module (38, 138), en particulier d'une chambre de découpe (6, 106) ;
- d'assemblage par serrage du premier module (36, 136) au deuxième module (38, 138) au moyen d'un dispositif de serrage rapide (8, 108, 208), dans lequel le dispositif de serrage rapide (8, 108, 208) est réalisé selon au moins l'une quelconque des revendications 1 - 17.

20. Procédé selon la revendication 19,
où le moyen de serrage (10, 110) est actionné au moyen d'un levier de serrage (42, 142) relié à l'au moins un élément de serrage (32, 32', 132, 132'),
et le levier de serrage (42, 142) est monté de manière à pouvoir pivoter à la manière d'un levier coudé sur le premier module (36, 136) ou sur le deuxième module (38, 138) du dispositif de granulation (2, 102) et est tourné au-delà d'un point mort pour l'assemblage par serrage et un assemblage par serrage autobloquant se produit.

21. Procédé selon au moins l'une quelconque des revendications 19 ou 20,
dans lequel l'élément de serrage (32, 32', 132, 132') présente en outre une section excentrique (52, 152), qui est réalisée de manière à appliquer, lors du déplacement de l'élément de serrage (32, 32', 132, 132') hors de la position de serrage (S), une force sur l'élément de verrouillage (40, 40', 140, 140'), laquelle sépare le premier module (36, 136) du deuxième module (38, 138),
où l'élément de serrage est déplacé, de préférence est tourné pour le desserrage et une force est appliquée sur l'élément de verrouillage (40, 40', 140, 140') par la section excentrique (52, 152) et desserre ainsi le premier module (36, 136) du deuxième module (38, 138), de préférence les espace au moins légèrement.

22. Levier de serrage (42, 142), lequel peut être couplé à un élément de serrage (32, 32', 132, 132') pour l'actionnement de l'élément de serrage (32, 32', 132, 132') d'un dispositif de serrage rapide (8, 108) selon l'une quelconque des revendications 1 à 17 pour l'assemblage par serrage d'un premier module (36, 136) d'un dispositif de granulation (2, 102) à un deuxième module (38, 138) du dispositif de granulation (2, 102),
**caractérisé en ce que** le levier de serrage (42, 142) présente deux branches de levier de serrage (43, 143) tenues à distance et une poignée (47, 147) reliant les branches de levier de serrage (43, 143).

23. Levier de serrage (42, 142) selon la revendication 22, lequel peut être couplé à l'élément de serrage (32, 32', 132, 132') pour l'actionnement de l'élément de serrage (32, 32', 132, 132') du dispositif de serrage rapide (8, 108) pour assembler par serrage le premier module (36, 136) du dispositif de granulation (2, 102) au deuxième module (38, 138) du dispositif de granulation (2, 102),
**caractérisé en ce que** le levier de serrage (42, 142), en particulier ses deux branches de levier de serrage (43, 143) tenues à distance, présente une première section de levier de serrage (49, 149) couplée à l'élément de serrage (32, 32', 132, 132') et une deuxième section de levier de serrage (51, 151) s'étendant selon un angle par rapport à la première section de levier de serrage (49, 149).

24. Levier de serrage (42, 142) selon l'une quelconque des revendications précédentes 22 ou 23, **caractérisé par** une troisième section de levier de serrage (51, 151) s'étendant selon un angle par rapport à la deuxième section de levier de serrage (51, 151), sur l'extrémité distale de laquelle une poignée (47, 147) est fixée.

25. Levier de serrage (42, 142) selon au moins l'une quelconque des revendications précédentes, 22 à 24, **caractérisé en ce que** le levier de serrage (42, 142) est monté de manière à pouvoir pivoter sur le premier module (36, 136) ou le deuxième module (38, 138) du dispositif de granulation (2, 102) de telle sorte que le levier de serrage (42, 142) parvient au-delà d'un point mort lors de l'assemblage par serrage à la manière d'un levier coudé et un assemblage par serrage autobloquant se produit.
